(19) **Europäisches Patentamt**
**European Patent Office**
**Office européen des brevets**

(11) **EP 3 870 422 B1**

(12) **EUROPÄISCHE PATENTSCHRIFT**

(45) Veröffentlichungstag und Bekanntmachung des Hinweises auf die Patenterteilung:
**15.03.2023 Patentblatt 2023/11**

(21) Anmeldenummer: **19780221.8**

(22) Anmeldetag: **30.09.2019**

(51) Internationale Patentklassifikation (IPC):
**B29C 45/77** (2006.01)     **B29C 45/76** (2006.01)

(52) Gemeinsame Patentklassifikation (CPC):
**B29C 45/77; B29C 45/7646; B29C 45/766;**
B29C 2045/776; B29C 2945/76006;
B29C 2945/76197; B29C 2945/76257;
B29C 2945/76381; B29C 2945/76384;
B29C 2945/76404; B29C 2945/76969

(86) Internationale Anmeldenummer:
**PCT/EP2019/076368**

(87) Internationale Veröffentlichungsnummer:
**WO 2020/083611 (30.04.2020 Gazette 2020/18)**

(54) **VERFAHREN ZUM BETREIBEN EINER SPRITZGIESSMASCHINE, INSBESONDERE HINSICHTLICH VERBESSERTER KONSTANTER WERKZEUGFÜLLUNG, SOWIE SPRITZGIESSMASCHINE ZUR DURCHFÜHRUNG DES VERFAHRENS**

METHOD FOR OPERATING AN INJECTION-MOLDING MACHINE, IN PARTICULAR WITH RESPECT TO IMPROVED CONSTANT MOLD FILLING, AND INJECTION-MOLDING MACHINE FOR CARRYING OUT THE METHOD

PROCÉDÉ SERVANT À FAIRE FONCTIONNER UNE MACHINE DE MOULAGE PAR INJECTION, EN PARTICULIER EN TERMES D'AMÉLIORATION DU REMPLISSAGE DE MOULE CONSTANT, AINSI QUE MACHINE DE MOULAGE PAR INJECTION SERVANT À METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2018 DE 102018126313**

(43) Veröffentlichungstag der Anmeldung:
**01.09.2021 Patentblatt 2021/35**

(73) Patentinhaber: **KraussMaffei Technologies GmbH**
**80997 München (DE)**

(72) Erfinder:
• **MOSER, Stefan**
**85399 Hallbergmoos (DE)**
• **TOPIC, Nicolina**
**80538 München (DE)**

• **GREGER, Sina**
**81371 München (DE)**

(74) Vertreter: **Wilhelm, Ludwig**
**KraussMaffei Group GmbH**
**Krauss-Maffei-Strasse 2**
**80997 München (DE)**

(56) Entgegenhaltungen:
EP-A1- 2 583 811     WO-A1-2019/213380
DE-B3-102013 111 257

• **HUTCHINSON H R: "IN-PROCESS CONTROL OF INJECTION VISCOSITY", MODERN PLASTICS, MCGRAW-HILL,INC. LAUSANNE, CH, Bd. 47, Nr. 10, 1. Oktober 1970 (1970-10-01), XP001173918, ISSN: 0026-8275**

EP 3 870 422 B1

## Beschreibung

Die Erfindung betrifft ein Verfahren zum Betreiben einer Spritzgießmaschine, insbesondere hinsichtlich verbesserter Werkzeugfüllung nach dem Oberbegriff des Anspruchs 1, sowie eine Spritzgießmaschine zur Durchführung des Verfahrens.

Eine herkömmliche Spritzgießmaschine umfasst im Besonderen ein Spritzgießwerkzeug, in das eine aufgeschmolzene Kunststoffmasse eingebracht wird. Dabei befinden sich im Spritzgießwerkzeug eine oder mehrere Kavitäten, die Formhohlräume für das Bauteil darstellen. Das Werkzeug umfasst außerdem ein Verteilersystem, über das die aufgeschmolzene Kunststoffmasse in die Kavität(en) gelangt. Die Spritzgießmaschine umfasst in der Regel einen beheizten Zylinder, mit dem die Spritzgießmasse geschmolzen und in das Spritzgießwerkzeug eingespritzt wird. In dem Zylinder befindet sich eine Schnecke zum Vortrieb der Spritzgießmasse. Eine herkömmliche Spritzgießmaschine umfasst des Weiteren zumeist einen vollgeregelten Antrieb für die Schnecke, mit dem u. a. der Druck der verflüssigten Spritzgießmasse (Massedruck) innerhalb des Zylinders eingestellt werden kann. Zur Überwachung des Spritzgießvorgangs sind bei herkömmlichen Spritzgießanlagen teilweise auch im Werkzeug Drucksensoren vorgesehen, die einen örtlichen Druck der flüssigen bzw. erstarrenden Spritzgießmasse innerhalb der Kavität (nachfolgend als Werkzeuginnendruck bezeichnet) messen.

Ein Arbeitszyklus einer Spritzgießmaschine gliedert sich im Wesentlichen in zwei Phasen, eine Einspritzphase, in der die Spritzgießmasse in die Kavität eingespritzt wird, sowie eine anschließende Nachdruckphase, in der die Kavität im Werkzeug bereits mit Spritzgießmasse voll ausgefüllt ist, in der aber zur Verdichtung der Masse und zur Schwindungskompensation maschinenseitig ein so genannter Nachdruck auf die Spritzgießmasse aufrechterhalten wird.

Für jedes Spritzgießwerkzeug gibt es eine im Detail individuell verschiedene "Ideal"-Form der Werkzeuginnendruckkurve über den Spritzgießzyklus, d. h. über die Einspritzphase und die Nachdruckphase. Diese ideale Werkzeuginnendruckkurve wird häufig im Zuge einer Prozessoptimierung als Referenzkurve bestimmt. Der tatsächliche Verlauf des Werkzeuginnendrucks in der laufenden Produktion hängt bei gleicher Einstellung des Zylinderinnendrucks (Massedruckes) im Wesentlichen von dem Fließverhalten der Kunststoffmasse ab. Das Fließverhalten ist wiederum u. a. durch die chemische Zusammensetzung der Spritzgussmasse, des Schereintrages und der Temperatur der Masse bestimmt. In der laufenden Produktion wird der Zylinderinnendruck (Massedruck) und die Anpassung der Umschaltposition in der Nachdruckphase üblicherweise manuell derart eingestellt, dass der Werkzeuginnendruck etwa auf der Referenzkurve verläuft. Größere Abweichungen hiervon führen zu Schlechtteilen, die aussortiert werden müssen.

Materialbedingte Störgrößen, die die Werkzeugfüllung beeinflussen, sind beispielsweise Schwankungen der Charge, des Rezyklats und des Trocknungsgrads. Des Weiteren können umgebungs- und prozessseitige Störeffekte auftreten, die beispielsweise Schwankungen der Werkzeugtemperierung, der Zylinderheizung sowie der Umgebungstemperatur, der Luftfeuchtigkeit und auch schwankendes Schließverhalten einer Rückstromsperre sein können. All diese Effekte rufen eine Viskositätsänderung der Schmelze hervor, die wiederum die Füllung der Kavität beeinflusst.

Wiederanfahrprozesse initiieren beispielsweise eine Viskositätsreduzierung, da während des Maschinenstillstands durch die Zylinderheizung weiterhin Energie in die Kunststoffmasse eingebracht wird.

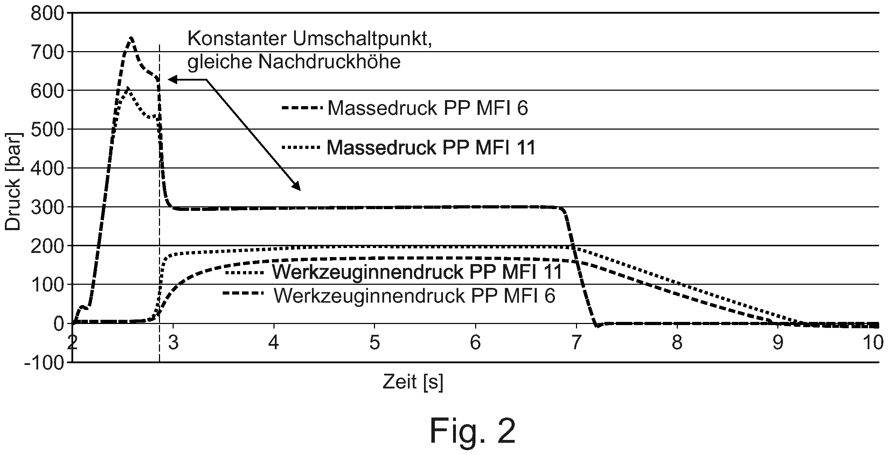

Eine Viskositätsänderung verursacht eine Änderung des Masse- bzw. Werkzeuginnendrucks. Figur 2 stellt zwei Zyklen unter der Verwendung von Polypropylen mit unterschiedlichen MFI (melt flow index)-Werten bei gleichen Prozesseinstellungen vergleichend dar, wobei ein niederviskoses Material (MFI 11) zu einem geringeren Massedruck bzw. zu einem höheren und schneller ansteigenden Werkzeuginnendruck führt. Dies deutet auf ein unterschiedliches Füllverhalten der Kavität hin, woraus z. B. bei der hochviskosen Masse (MFI 6) eine Unterfüllung der Kavität resultiert, wenn dieses Material mit Prozessparametern eines niedriger viskosen Materials (z. B. MFI 11) verarbeitet wird.

Ausschlaggebend für die unterschiedliche Füllung der Kavität ist die unterschiedliche Druckbeaufschlagung der aufgeschmolzenen Kunststoffmasse am Umschaltpunkt. Trotz der konstanten Umschaltposition und der gleichen Einspritzgeschwindigkeit, wird die Masse bei einem hohen Druck stärker komprimiert, wodurch sich eine höhere Dichte ergibt. Dementsprechend wird weniger Schmelzevolumen in die Kavität eingespritzt. Um eine ungleiche Füllung der Kavität durch Schwankungen des Fließverhaltens im Material auszugleichen, gibt es verschiedene Lösungsansätze.

Zum einen gibt es das Konzept der Regelung der Kavitätsfüllung anhand von Sensorik, die maschinenseitig verbaut ist. Hierbei werden die bestimmten Prozessparameter unter Verwendung von Regelgrößen so angepasst, dass eine konstante Kavitätenfüllung unabhängig von Viskositätsänderungen gewährleistet ist. Die Regelgrößen basieren auf Maschinensignalen (z.B. Massedruck) und werden meist auf einen oder mehrere Gutteilzyklen referenziert.

Ein alternativer Lösungsansatz zur Überwachung der Kavitätenfüllung ist die Verwendung von werkzeugseitig verbauter Sensorik (Werkzeuginnendruck, Werkzeugwandtemperatur). Je nach Regelkonzept wird der Spritzgießmaschine ein Prozessparameter geliefert, der den Spritzgießprozess so anpasst, dass eine konstante Kavitätenfüllung realisiert wird.

Zu maschinenseitigen Kompensationsmöglichkeiten der durch Störeinflüsse bedingten Prozessschwankungen ist aus dem Stand der Technik Nachfolgendes bekannt:

1) DE 10 2015 117 237 B3:

Diese Schrift betrifft ein Verfahren zur Bestimmung eines realen Volumens $V_r$ einer spritzgießfähigen Masse während eines Spritzgießprozesses, wobei die spritzgießfähige Masse in zumindest eine Kavität eines Formwerkzeuges eingebracht wird und weist die Schritte auf:

a) Ermittlung eines theoretischen Volumens Vt aus Prozessgrößen zumindest während einer Füllphase des Spritzgießprozesses,
b) Ermittlung und/oder Messung zumindest eines Wertes für zumindest einen Massedruck $p_M$
c) Auswahl einer dem Wert von $p_M$ entsprechenden materialspezifischen Kompression k (p) der spritzgießfähigen Masse,
d) Berechnung eines realen Volumens $V_r$ unter Berücksichtigung der Kompression k(p). $V_r$ wird dabei durch die Anpassung der Umschaltposition und der Nachdruckhöhe konstant gehalten.

Das eingebrachte Schmelzevolumen am Nachdruckende wird konstant gehalten. Um dies zu erreichen wird der Nachdruck in seiner Höhe angepasst. Ein konstantes Schmelzevolumen am Nachdruckende kann z. B. die Effekte, "Schwankung der Werkzeug- bzw. Schmelzetemperatur" oder auch "temperaturabhängiges Schwindungsverhalten der Schmelze" nicht ausregeln.

2) DE 10 2013 111 257 B3:
Diese Schrift betrifft ein Verfahren zur volumetrisch korrekten Füllung einer Formkavität eines Formwerkzeuges, bei dem in einer Lernphase ein Formteil-Volumen-Äquivalent ermittelt wird und in einer Produktionsphase Produktionsspritzgießzyklen derart beeinflusst werden, dass das in der Lernphase ermittelte Formteil-Volumen-Äquivalent auch in dem Produktionsspritzgießzyklus erfüllt ist. Die Anpassung erfolgt über eine Beeinflussung der Umschaltposition und der Nachdruckhöhe.

Zu werkzeugseitigen Kompensationsmöglichkeiten der durch Störeinflüsse bedingten Prozessschwankungen, ist aus dem Stand der Technik Nachfolgendes bekannt:

1) DE 10 2013 111 257 B3:
Hieraus ist bekannt, dass die Nachdruckhöhe über eine Korrekturkonstante in Abhängigkeit der gemessenen Viskosität aus dem Einspritzvorgang berechnet wird. Da es sich bei diesem Verfahren um eine Steuerung handelt, kann der Nachdruck zwar in die richtige Richtung angepasst werden. Jedoch werden z. B. Schwankungen der Schmelztemperatur bzw. Änderungen der Werkzeugtemperatur nicht kompensiert, obwohl beide Effekte Auswirkungen auf die Schwindung bzw. das Abkühlverhalten haben.

2) DE 2 358 911 A:
Die Fließfrontgeschwindigkeit und die Schmelzetemperatur werden durch Massedruck- und Temperaturaufnehmer im Spritzgießwerkzeug ermittelt, so dass der Spritzdruck und bzw. oder die Einspritzgeschwindigkeit in Abhängigkeit von den Messwerten der Messwertaufnehmer gesteuert sind.

3) DE 35 24 310 C1:
Es wird ein Verfahren zum geregelten Spritzgießen von Kunststoffformmassen beschrieben. Hierbei wird die Einspritzarbeit (berechnet aus Werkzeuginnendruck) zur Führung des Spritzgießprozesses herangezogen. Der Endwert für den Schneckenweg und das Nachdruckprofil (Höhe und Zeit) werden abgespeichert und für einen Anpassungsfaktor herangezogen. Die Prozessführung über die Einspritzarbeit hat allerdings den Nachteil, dass sie sehr stark durch Unregelmäßigkeiten in der Anlaufphase des Einspritzvorgangs gekennzeichnet ist.

4) DE 10 2005 032 367 A1:
Es wird ein Ansatz verfolgt, bei dem die Zeit überwacht wird, die die Kunststoffschmelze in der Kavität zu einem Sensor benötigt. Hierzu werden Temperatur- und Drucksensoren im Werkzeug verwendet. Bei Änderungen in der Zeit wird die Viskosität der Schmelze (z.B. mittels Änderung der Temperatur) verändert.

5) EP 2 583 811 A1:
EP 2 583 811 A1 verfolgt den Ansatz einer Prozessregelung für den Einspritzvorgang zur Regelung des Einspritzvolumens. Geschwindigkeitsprofil und Umschaltpunkt werden bei Änderung der Viskosität der Kunststoffschmelze und / oder des eingebrachten Volumens noch während der Einspritzphase geändert. Das Verfahren beruht auf einem Vergleich der Spritzdruckkurve des Werkzeuginnendrucksensors mit einer Referenzkurve.

Die zuvor beschriebenen Lösungsansätze regeln bzw. steuern noch im selben Zyklus. Es folgen Lösungsansätze mit einer adaptiven Regelung, bei der nicht mehr im aktuellen, sondern im darauffolgenden Zyklus regelnd eingegriffen wird.

<u>6) DE 10 2007 061 775 A1:</u>

Der zeitliche Verlauf des Werkzeuginnendrucks in der Nachdruckphase wird gemessen. Weicht dieser von einem Vergleichswert ab, folgt ein angepasster Nachdruck für einen nachfolgenden Spritzgussgang.

Es wird ein Spritzgussverfahren angegeben, bei dem während der Nachdruckphase ($P_N$) eines Spritzgießzyklus ($Z^{(i)}$) der zeitliche Verlauf eines Werkzeuginnendrucks ($p_w$) gemessen wird, bei dem aus dem erfassten Verlauf des Werkzeuginnendrucks ($p_w$) mindestens eine nicht-zeitabhängige Kenngröße ($p_a$; $p_{max}$, $t_{max}$, $m$, $\tau_1$, $\tau_2$) ermittelt wird, bei dem die oder jede Kenngröße ($p_a$; $p_{max}$, $t_{max}$, $m$, $\tau_1$, $\tau_2$) mit einem hinterlegten Kenngrößen-Sollwert ($p_{a,0}$) verglichen wird und bei dem anhand des Vergleichsergebnisses automatisch ein angepasster Nachdruckwert ($p_N$) für einen nachfolgenden Spritzgießzyklus ($Z^{(i+1)}$) ermittelt wird. Eine zugehörige Spritzgussanlage umfasst insbesondere ein Spritzgusswerkzeug das mit einem Innendrucksensor zur Erfassung eines Werkzeuginnendrucks ($p_w$) versehen ist, sowie einen zur Durchführung des Verfahrens ausgebildeten Nachdruckregler.

Aus DE 10 2007 061 775 A1 ist somit ein Verfahren bekannt, das einen maximalen Werkzeuginnendruck in der Nachdruckphase ermittelt und diesen als Referenzwert in den nachfolgenden Zyklen angibt. Durch eine Anpassung der Nachdruckhöhe soll dieser Werkzeuginnendruck wieder erreicht werden. Dieses Verfahren kann keine Viskositätsänderung und werkzeugseitige Störgrößen ausgleichen.

<u>7) DE 10 2005 016 618 B3:</u>

Der Zusammenhang zwischen Druck, Temperatur und Viskosität in der Einspritzphase wird ermittelt, wobei der Druckverlauf gemessen wird und der Temperaturverlauf dazu mathematisch bestimmt wird. Es folgt eine Änderung des Staudrucks und / oder der Drehzahl proportional zur gemessenen Druckdifferenz.

<u>8) EP 897 786 A2:</u>

Anhand der Messung des Werkzeuginnendrucks (an einer Stelle, an der der Durchmesser quer zur Fließrichtung maximal ist) wird eine Führungsgröße abgeleitet und bewertet, ob eine Nachregelung nötig ist. Wenn eine Abweichung bei mehreren aufeinanderfolgenden Zyklen auftritt, wird der am stärksten abweichende Parameter nachgeregelt. Der Umschaltpunkt wird automatisch aus Innendruckkurvenverlauf bestimmt. Dabei wird der Werkzeuginnendruck-Verlauf mit einer Referenzkurve bis mindestens zum Siegelpunkt abgeglichen und eine Änderung der Einspritzgeschwindigkeiten durch Quotienten aus Integralen von aktueller und Referenzkurve vorgenommen.

Aufgabe der Erfindung ist es, ein Verfahren zum Betreiben einer Spritzgießmaschine anzugeben, welches hinsichtlich der Formwerkzeugfüllung weiter optimiert ist und die Nachteile des Standes der Technik vermindert oder gar vermeidet. Außerdem ist es Aufgabe der Erfindung eine Spritzgießmaschine zur Durchführung des Verfahrens anzugeben.

Insbesondere soll ein Verfahren zum Betreiben einer Spritzgießmaschine angegeben werden, bei dem hinsichtlich des Formteilvolumens/der Kavitätenfüllung der Einfluss von Materialschwankungen und/oder Umweltbedingungen, die Einfluss auf das verwendete Material haben, möglichst automatisiert ausgeglichen werden können und ein Ausschussanteil vermindert sein. Insbesondere soll das Verfahren Viskositätsänderungen der Spritzgießmasse und/oder werkzeugseitige Störgrößen, wie z. B. ein teilweiser Ausfall oder eine Verschlechterung der Kühlleistung ausgleichen.

Insgesamt sollen also die Qualität und Zuverlässigkeit des Spritzgießprozesses erhöht werden und die Ausbeute an Gutteilen erhöht werden.

Weiterhin ist es Aufgabe der Erfindung zur Durchführung des Verfahrens eine Spritzgießmaschine anzugeben.

Diese Aufgabe wird mit dem erfindungsgemäßen Verfahren nach Anspruch 1 und einer Spritzgießmaschine nach Anspruch 18 gelöst. Vorteilhafte Ausführungsformen sind in den Unteransprüchen angegeben.

Zur Lösung der Aufgabe(n) wird erfindungsgemäß ein Verfahren zum Betreiben einer Spritzgießmaschine mit den nachfolgenden Schritten angegeben:

a) Nach einem in einer Lernphase gelernten Gutteil-Referenzspritzgießzyklus in einem aktuellen Spritzgießzyklus: Erkennen einer Massedruckänderung $k_1$ gegenüber einem Gutteil-Referenzmassedruck $p_{masse,ref}$ während zumindest eines Teils einer Einspritzphase des aktuellen Spritzgießzyklus durch Messung eines aktuellen Massedruckes $p_{masse,act}$ und Vergleich des aktuellen Massedruckes $p_{masse,act}$ mit dem Gutteil-Referenzmassedruck $p_{masse,ref}$.

b) Bestimmung eines Soll-Werkzeuginnendruckverlaufes $p_{wkz,soll}(t)$ für eine Nachdruckphase des aktuellen Spritzgießzyklus, wobei hierzu ein Werkzeuginnendruckverlauf $p_{wkz,ref}(t)$ des Gutteil-Referenzspritzgießzyklus wenigstens in Abhängigkeit der im Schritt a) erkannten Massedruckänderung $k_1$ angepasst wird und

c) der Nachdruckverlauf $p_{masse,Hld,act}(t)$ des aktuellen Spritzgießzyklus derart abgefahren wird, dass ein Ist-Werkzeuginnendruckverlauf $p_{wkz,act}(t)$ des aktuellen Spritzgießzyklus zumindest näher am Soll-Werkzeuginnendruckverlauf $p_{wkz,soll}(t)$ entlangläuft als ein gegenüber dem Gutteil-Referenzzyklus unveränderter Werkzeuginnendruckverlauf $p_{wkz,ref}(t)$.

Erfindungsgemäß wird also während einer Einspritzphase eines aktuellen Spritgießzyklus durch Messung eines aktuellen Massedruckes oder Massedruckverlaufes $p_{masse,act}(t)$ und in Kenntnis eines korrespondierenden Massedruckes oder Massedruckverlaufes $p_{masse,ref}(t)$ eine gegebenenfalls auftretende Viskositätsänderung des Materials, die beispielsweise durch Temperaturschwankungen, Feuchtigkeitsschwankungen oder durch Schwankungen anderer Umgebungsbedingungen verursacht sein kann, erkannt. Mit dieser Erkenntnis aus der Einspritzphase eines aktuellen Spritzgießzyklus wird in demselben Spritzgießzyklus mittels eines Algorithmus ein Soll-Werkzeuginnendruckverlauf $p_{wkz,soll}(t)$ für eine Nachdruckphase dieses aktuellen Spritzgießzyklus bestimmt. Zur Erreichung des Soll-Werkzeuginnendruckverlaufes $p_{wkz,soll}(t)$ wird eine Nachdruckhöhe $p_{masse,Hld,ref}(t)$ oder ein Nachdruckverlauf $p_{masse,Hld,ref}$ aus einem ReferenzSpritzgießzyklus in Abhängigkeit der in der Einspritzphase erkannten Massedruckänderung $k_1$ angepasst. Die Massedruckänderung $k_1$ wird bevorzugt z. B. aus singulären Massedruckwerten $p_{masse,act}/p_{masse,ref}$ in einer Einspritzphase, ist besonders bevorzugt aus einem Massedruckverlauf $p_{masse,act}(t)/p_{masse,ref}(t)$ während zumindest eines Teils der Einspritzphase oder aus entsprechenden Mittelwerten $p_{masse,avg,act}/p_{masse,ref,avg}$ bestimmt Ein Erkennungszeitraum der Massedruckände-rung$k_1$ oder der Massedruckverlaufsänderung oder einer Werterfassung zur Bestimmung eines Mittelwertes in der Einspritzphase endet dabei am Umschaltpunkt oder so rechtzeitig vor einem zu erwartenden Umschaltpunkt $t_1 = t_{umschalt}$, dass ein gegebenenfalls verschobener Umschaltpunkt noch errechnet und das Umschalten eingeleitet werden kann. Der Erkennungszeitraum der Massedruckänderung oder der Massedruckverlaufsänderung $k_1$ oder einer Werterfassung zur Bestimmung eines Mittelwertes während der Einspritzphase kann entweder mit dem Start der Einspritzung der Kunststoffschmelze ($t_0 = t_{inj,start}$) beginnen oder bevorzugt, insbesondere im Falle des Einsatzes einer Rückstromsperre (RST) nach einem sicher erfolgten Schließen der Rückstromsperre starten.

Aus dem Vergleich zwischen dem Massedruckverlauf $p_{masse,ref}(t)$ eines Gutteil-Referenzspritzgießzyklus und dem Massedruckverlauf $p_{masse,act}(t)$ des aktuellen Spritzgießzyklus wird nunmehr in Abkehr von der verfestigten Meinung der Fachwelt ein neuer, den geänderten Bedingungen angepasster Soll-Werkzeuginnendruckverlauf $p_{wkz,soll}(t)$ berechnet, der den geänderten Material- und/oder Umgebungsbedingungen Rechnung trägt. Hierbei wird also ganz bewusst, von Zyklus zu Zyklus oder zumindest intervallmäßig ein Sollverlauf des Werkzeuginnendruckes neu ermittelt, da im Rahmen der Erfindung erkannt wurde, dass ein Konstanthalten des Werkzeuginnendruckes, wie es im Stand der Technik oftmals Ziel der Spritzgießprozessführung ist, bewusst verlassen werden sollte.

Somit wird erfindungsgemäß, im Unterschied zum Stand der Technik, abhängig von Material- und/oder Umgebungsbedingungen im Bedarfsfall für jeden Schuss ein neuer Soll-Werkzeuginnendruckverlauf $p_{wkz,soll}(t)$ berechnet, der dann durch entsprechende Adaption des Nachdrucks, welcher ein Massedruck $p_{masse,Hld}$ in dem Raum vor der Plastifizierschnecke ist, möglichst angenähert wird.

Eine bevorzugte Ausführungsform ist dadurch gekennzeichnet, dass das Verfahren vor, nach oder während Schritt b) weiterhin folgende Schritte aufweist:

b1) Bestimmung eines Soll-Umschaltwerkzeuginnendruckes $p_{wkz,umschalt,soll}$ für den aktuellen Spritzgießzyklus zumindest in Abhängigkeit der im Schritt a) erkannten Massedruckänderung, $k_1$

b2) Umschalten bei Erreichen des in Schritt b1) bestimmten Soll-Umschaltwerkzeuginnendrucks $p_{wkz,umschalt,soll}$.

So kann auch ein Soll-Umschaltwerkzeuginnendruck$p_{wkz,umschalt,soll}$ für den aktuellen Spritzgießzyklus bei Bedarf von Schuss zu Schuss neu berechnet werden. Bei Erreichen dieses Soll-Umschaltwerkzeuginnendruckes wird dann umgeschaltet, so dass der erfindungsgemäße Effekt erreicht wird, dass das viskositätsberücksichtigende Umschalten in die Nachdruckphase noch im aktuellen Spritzgießzyklus beeinflusst wird. Nach dem Umschalten beginnt die Nachdruckphase, in der dann der im Schritt b) ermittelte Soll-Werkzeuginnendruckverlauf $p_{wkz,soll}(t)$ angewendet wird. Dies bedeutet, dass die Nachdruckphase durch Adaption des Nachdruckes $p_{masse,Hld,act}$ so verändert wird, damit der Soll-Werkzeuginnendruckverlauf erreicht wird. Im Bedarfsfall wird iterativ eine Abweichung vom Soll-Werkzeuginnendruckverlauf $p_{wkz,soll}(t)$ durch eine Feinjustierung der Nachdruckphase in den nachfolgenden Spritzgießzyklen ausgeglichen. Dies erfolgt zweckmäßiger Weise durch eine Überwachung (Messung) des jeweils aktuellen Werkzeuginnendruckverlaufes $p_{wkz,act}(t)$ in dem jeweils aktuellen Spritzgießzyklus.

Somit ist das erfindungsgemäße Verfahren also in der Lage, in ein und demselben Zyklus durch Messung und Anwendung einfach erhaltbarer Parameter (z. B. Drücke, Temperaturen, Schneckenpositionen, Volumenstrom, Drehmoment, etc.) eine Eigenschaftsänderung, z. B. eine Viskositätsänderung der Spritzgießmasse zu erkennen und bereits in demjenigen Zyklus, in dem die Erkenntnis gewonnen wird, Anpassungsschritte in der Nachdruckphase vorzunehmen. Hierdurch und durch die erfindungsgemäße, zyklusspezifische Anpassung des Soll-Werkzeuginnendruckverlaufes

$p_{wkz,soll}(t)$ gelingt es erfindungsgemäß, einen Ausschussanteil aufgrund unbefriedigender Formfüllung deutlich zu reduzieren. Die Qualität und Zuverlässigkeit des Spritzgießprozesses ist somit deutlich erhöht.

Eine bevorzugte Ausführungsform ist dadurch gekennzeichnet, dass die Bestimmung des Soll-Werkzeuginnendruckverlaufes $p_{wkz,soll}(t)$ zusätzlich in Abhängigkeit einer Druckübertragungscharakteristik $k_2$ zwischen einem Werkzeuginnendruck $p_{wkz}$ und einem korrespondierenden Massedruck $p_{masse}$ und/oder unter Verwendung eines materialspezifischen Faktors $k_{mat}$ bestimmt wird.

Als Druckübertragungscharakteristik $k_2$ eines Werkzeugs wird ein Verhältnis zwischen einem Massedruck $p_{masse}$ und einem hieraus resultierenden Werkzeuginnendruck $p_{wkz}$ eines Spritzgießzyklus verstanden, wobei neben Einzelwerten der genannten Dücke auch deren Verläufe oder Mittelwerte Verwendung finden können. Die hieraus entstehende Druckübertragungscharakteristik $k_2$ bildet einen werkzeugspezifischen Einflussfaktor, welcher im Folgenden zur Bestimmung des Soll-Werkzeuginnendruckes/Soll-Innendruckverlaufes bevorzugt Verwendung findet. Die Einbeziehung der Druckübertragungscharakteristik $k_2$ eines Werkzeuges sorgt für eine erhöhte Genauigkeit und verbesserte Formfüllung und/oder Bauteilqualität, da zusätzlich zur erfindungsgemäß zu berücksichtigten, gegebenenfalls auftretenden Viskositätsänderung der Kunststoffschmelze auch werkzeugspezifische Charakteristika, wie z. B. Bauteilgeometrien, d. h. Kavitätsgeometrien oder Geometrien und Bauweisen von Angusskanälen, beispielsweise als Heißkänale oder dergleichen, berücksichtigt werden.

Weiterhin ist es vorteilhaft, einen materialspezifischen Faktor $k_{mat}$ bei der Bestimmung des Soll-Werkzeuginnendruckverlaufes $p_{wkz,soll}(t)$ zu berücksichtigen. Mit diesem Faktor können empirisch zu ermittelnde Materialeigenschaften in die Prozessführung des aktuellen Spritzgießprozesses einfließen. Diese Maßnahme erhöht die Genauigkeit und die Bauteilqualität weiter.

Eine weitere bevorzugte Ausführungsform ist dadurch gekennzeichnet, dass im Gutteil-Referenzspritzgießzyklus und im aktuellen Spritzgießzyklus als Messgröße, die mit einer Verarbeitungsviskosität der Schmelze korreliert, ein Massedruckintegral während des Einspritzens ermittelt wird, insbesondere nach der Formel:

$$W_{z,act/ref} = \int_{t_0}^{t_1} p_{masse,act/ref}(t)\, dt,$$

wobei $t_0$ ein Zeitpunkt des Beginns der Einspritzphase $t_{inj,start}$ oder ein Zeitpunkt nach dem Schließen einer Rückstromsperre ist und

$t_1$ ein Zeitpunkt des Umschaltens $t_{inj,umschalt}$ ist oder ein Zeitpunkt der nach $t_0$ aber vor $t_{inj,umschalt}$ liegt.

Gemäß dieser Ausführungsform wird zur Bestimmung der Massedruckänderung $k_1$ jeweils im Gutteil-Referenzspritzgießzyklus und im aktuellen Spritzgießzyklus eine einer Einspritzarbeit ähnliche Größe durch Ermittlung eines Druckintegrals in den Zeitgrenzen $t_0$ und $t_1$ jeweils im Gutteil-Referenzspritzgießzyklus und im aktuellen Spritzgießzyklus gemessen und berechnet. Ein solches Druckintegral korreliert mit einer Verarbeitungsviskosität der Schmelze gut, so dass im weiteren Verlauf, basierend auf derartigen Druckintegralen eine geänderte Prozessführung gut und genau ermittelt werden kann.

Eine weitere bevorzugte Ausführungsform ist dadurch gekennzeichnet, dass im Gutteil-Referenzspritzgießzyklus und/oder im aktuellen Spritzgießzyklus zusätzlich wenigstens eine der folgenden Größen bestimmt und bei Bedarf aufgezeichnet werden:

- maximaler Werkzeuginnendruck $p_{wkz,max}$ sowie
- der dazugehörige Zeitpunkt $t_{wkz,max}$,
- einen Abfall des Werkzeuginnendrucks nach Erreichen des Maximums ($m_1$)
- ein Werkzeuginnendruckmittel $p_{wkz,avg}$ und/oder ein Massedruckmittel $p_{masse,avg}$ in der Einspritzphase und/oder ein Werkzeuginnendruckmittel $p_{wkz,Hld,avg}$ und/oder ein Massedruckmittel $p_{masse,Hld,avg}$ in der Nachdruckphase,
- eine Werkzeuginnendruckfläche $p_{a,wkz}$ in der Nachdruckphase, insbesondere als Druckintegral nach folgender Formel

$$\int_{t_2}^{t_3} p_{wkz,Hld}(t)$$

- eine Massedruckfläche $p_{a,masse}$ in der Nachdruckphase, insbesondere als Druckintegral nach folgender Formel

$$\int_{t_2}^{t_3} p_{masse,Hld}(t) \quad .$$

wobei: $p_{wkz,Hld}(t)$ der Werkzeuginnendruckverlauf in der Nachdruckphase ist,

$p_{masse,Hld}(t)$ der Massedruckverlauf in der Nachdruckphase ist,
$p_{wkz,avg}$ ein Mittelwert des Werkzeuginnendruckes während der Einspritzphase ist,
$p_{masse,avg}$ ein Mittelwert des Massedruckes während der Einspritzphase ist,
$p_{wkz,Hld,avg}$ ein Mittelwert des Werkzeuginnendruckes während der Nachdruckphase,
$p_{masse,Hld,avg}$ ein Mittelwert des Massedrucks in der Nachdruckphase ist,
$t_2$ ein Zeitpunkt am oder nach dem Umschaltpunkt, insbesondere der Umschaltzeitpunkt ist und
$t_3$ ein Zeitpunkt nach $t_2$, z.B. der Zeitpunkt des Endes der Nachdruckphase
$t_{Hld,End}$ oder ein Zeitpunkt vor dem Ende der Nachdruckphase, insbesondere der Zeitpunkt $t_{wkz,max}$ des maximalen Werkzeuginnendruckes des jeweiligen Zyklus ist.

Parallel zu den bereits oben genannten Prozessgrößen oder Prozessparameter bietet es sich vorteilhafter Weise an, noch weitere Prozessgrößen/Prozessparameter zu ermitteln. So kann beispielsweise die Kenntnis eines maximalen Werkzeuginnendruckes $p_{wkz,max}$ sowie des dazugehörigen Zeitpunktes $t_{wkz,max}$ und eine Kenntnis des Abfalls des Werkzeuginnendruckes $m_1$ nach Erreichen dieses Maximums, ein guter Hinweis auf eine Temperaturänderung der Schmelze in der Nachdruckphase, nach diesem Zeitpunkt sein. Hieraus ergeben sich weiterhin gute Möglichkeiten zur Anpassung der Nachdruckverlaufes nach Durchschreiten des maximalen Werkzeuginnendrucks $p_{wkz,max}$.

Zur Vereinfachung von Berechnungen in der Einspritzphase und/oder in der Nachdruckphase kann es zweckmäßig sein, anstelle von Druckintegralen Druckmittelwerte, beispielsweise ein Werkzeuginnendruckmittel $p_{wkz,avg}$ und/oder ein Massedruckmittel $p_{masse,avg}$ in der Einspritzphase oder der Nachdruckphase zu bestimmen.

Die Bestimmung der Werkzeuginnendruckfläche $p_{a,wkz}$ und der Massedruckfläche $p_{a,masse}$ jeweils in der Nachdruckphase kann in besonders genauer Art und Weise als Integral in den Zeitgrenzen $t_2$ und $t_3$ bestimmt werden, was eine hochgenaue Bestimmung des Soll-Werkzeuginnendruckes $p_{wkz,soll}(t)$ für einen nachfolgenden Zyklus oder des hieraus resultierenden Nachdrucks ermöglicht. Dabei ist $t_2$ ein Zeitpunkt nach dem Umschaltpunkt, also ein Zeitpunkt der Nachdruckphase. $t_3$ liegt zweckmäßiger Weise nach $t_2$ und kann in besonders bevorzugter Weise als der Zeitpunkt des maximalen Werkzeugdruckes $t_{wkz,max}$ gewählt werden. Dies hat insbesondere den Vorteil, dass dann bereits Berechnungen vorgenommen werden können und gegebenenfalls in der Zeitspanne nach dem Erreichen des maximalen Werkzeugdruckes noch im gleichen Spritzgießzyklus weitere Änderungen am Ende der Nachdruckphase vorgenommen werden können.

Eine weitere bevorzugte Ausführungsform ist dadurch gekennzeichnet, dass als Massedruckänderung $k_1$ ein Verhältnis des Druckintegrals während des Einspritzens im aktuellen Spritzgießzyklus und des Druckintegrals während des Einspritzens des Gutteil-Referenzspritzgießzyklus ermittelt wird, insbesondere nach der Formel

$$k_1 = W_{z,act}/W_{z,ref}$$

oder
als Massedruckänderung $k_1$ ein Verhältnis des Mittelwertes des Massedrucks während des Einspritzens im aktuellen Spritzgießzyklus und des Mittelwertes des Massedrucks während des Einspritzens des Gutteil-Referenzspritzgießzyklus ermittelt wird, insbesondere nach der Formel

$$k_1 = p_{masse,Hld,avg}/p_{masse,ref,avg}$$

oder
als Massedruckänderung $k_1$ ein Verhältnis eines oder mehrerer Druckeinzelwerte während des Einspritzens im aktuellen Spritzgießzyklus und während des Einspritzens des Gutteil-Referenzspritzgießzyklus ermittelt wird, insbesondere nach der Formel

$$k_1 = p_{masse,act}/p_{masse,ref} .$$

Aus den im Vorfeld ermittelten Mess- und/oder Prozessgrößen, sowohl im Gutteil-Referenzspritzgießzyklus wie auch im aktuellen Spritzgießzyklus kann in einfacher Art und Weise die Massedruckänderung $k_1$, die eine Änderung der Schmelzeeigenschaften, insbesondere der Schmelzeviskosität des aktuellen Spritzgießzyklus gegenüber eines Gutteil-Referenzspritzgießzyklus wiederspiegelt, in bevorzugter Art und Weise in den oben genannten Vorgehensweisen berechnet werden. Dabei ist die Berechnung der Massedruckänderung $k_1$ als Verhältnis der Massedruckintegrale $W_z$ die genaueste Betrachtungsweise. Prinzipiell funktionieren auch die Bestimmungen der Massedruckänderung $k_1$ über angegebene Verhältnisse der Mittelwerte oder sogar einzelner Massedruckpunkte, allerdings mit etwas reduzierter Genauigkeit/Reproduzierbarkeit.

Eine weitere bevorzugte Ausführungsform ist dadurch gekennzeichnet, dass als eine Druckübertragungscharakteristik $k_2$ zwischen Werkzeuginnendruck $p_{wkz}$ und Massedruck $p_{masse}$ während der Nachdruckphase im Gutteil-Referenzspritzgießzyklus und im aktuellen Spritzgießzyklus ermittelt wird, insbesondere nach zumindest eine der Formeln

$$a) \quad k_2 = \frac{\int_{t2}^{t3} p_{wkz,Hld}(t)}{\int_{t2}^{t3} p_{masse,Hld}(t)} \quad ,$$

$$b) \quad k_2 = \frac{p_{wkz,Hld,avg}}{p_{masse,Hld,avg}}$$

$$c) \quad k_2 = \frac{p_{wkz,Hld}}{p_{masse,Hld}}$$

wobei:- $p_{masse,Hld}(t)$ der Massedruckverlauf während der Nachdruckphase ist,

- $p_{wkz,Hld}(t)$ der Werkzeuginnendruckverlauf während der Nachdruckphase ist,
- $t_2$ ein Zeitpunkt am oder nach dem Umschaltpunkt, insbesondere der Umschaltzeitpunkt $t_{inj,umschalt}$ ist und
- $t_3$ der Zeitpunkt des Endes der Nachdruckphase $t_{Hld,End}$ oder ein Zeitpunkt vor dem Ende der Nachdruckphase aber nach $t_2$ ist.

Die Druckübertragungscharakteristik $k_2$, die im Wesentlichen eine werkzeugspezifische Einflussgröße ist, kann in oben genannter Art und Weise ebenfalls über ein Verhältnis von Druckintegralen, ein Verhältnis von Mittelwerten oder ein Verhältnis von Einzeldruckwerten gebildet werden, wobei diese Ermittlungen in der genannten Reihenfolge von abnehmender Genauigkeit sind. Dafür vereinfacht sich die Berechnung und insbesondere auch der für die Berechnung notwendige Beobachtungszeitraum der entsprechenden Drücke. Bei der Ermittlung der Druckübertragungscharakteristik $k_2$ werden Drücke, Mittelwerte oder Druckintegrale ins Verhältnis gesetzt, wobei im Zähler die entsprechenden Werte des Werkzeugdruckes in der Nachdruckphase stehen und sich im Nenner die entsprechenden Werte des Massedruckes in der Nachdruckphase befinden.

Eine weitere bevorzugte Ausführungsform ist dadurch gekennzeichnet, mittels mindestens einem Werkzeuginnendrucksensor der zeitliche Werkzeuginnendruckverlauf $p_{wkz,ref}(t)$ des Gutteil-Referenzspritzgießzyklus und oder des aktuellen Spritzgießzyklus $p_{wkz,act}(t)$ innerhalb der Einspritz- und/oder der Nachdruckphase aufgezeichnet wird.

Eine weitere bevorzugte Ausführungsform ist dadurch gekennzeichnet, dass der Soll-Werkzeuginnendruckverlauf $p_{wkz,soll}(t)$ des aktuellen Spritzgießzyklus nach der Formel

$$p_{wkz,soll}(t) = p_{wkz,ref}(t) \cdot \frac{k_{mat}}{k_1 \cdot k_2}$$

ermittelt wird, wobei

$k_{mat}$ ein oder mehrere empirisch ermittelte, materialspezifische Faktoren sind und
$k_1, k_2$ Faktoren sind, die wenigstens das Fließverhalten der Schmelze und/oder eine werkzeugspezifische Abhängigkeit zwischen Massedruck $p_{masse}$ und resultierendem Werkzeuginnendruck $p_{wkz}$ berücksichtigen.

Mit den vorab ermittelten Werten kann in einfacher Art und Weise ein Soll-Werkzeuginnendruckverlauf $p_{wkz,soll}(t)$ nach der oben angegebenen Formel berechnet werden, wobei als Ausgangspunkt insbesondere der zugehörige Werkzeuginnendruckverlauf $p_{wkz,ref}(t)$ des Gutteil-Referenzspritzgießzyklus durch Verwendung der Faktoren $k_{mat}$ und $k_1$ und

$k_2$ abgewandelt wird.

Eine weitere bevorzugte Ausführungsform ist dadurch gekennzeichnet, dass die Druckübertragungscharakteristik $k_2$ aus einer im Gutteil-Referenzspritzgießzyklus aufgenommenen Druckübertragungsfunktion $f(p_{masse,Hld,ref,i})$ berechnet wird, wobei

$$f(p_{masse,Hld,ref,i}) = \int_{t_2}^{t_3} p_{wkz,ref,i}(t).$$

Um Streuungen des Werkzeugdruckverlaufes $p_{wkz,trg}(t)$ im Gutteil-Referenzspritzgießzyklus möglichst auszuschließen, empfiehlt es sich, mehrere derartige Verläufe aufzuzeichnen und die Druckübertragungscharakteristik $k_2$ anhand einer Schar von Werkzeuginnendruckverläufen zu ermitteln und so eine Druckübertragungsfunktion bereitstellen zu können. Eine solche, über mehrere Gutteil-Referenzspritzgießzyklen erhaltene Druckübertragungsfunktion $f(p)$ bietet eine verbesserte stabilere Aussagekraft über die Druckübertragungscharakteristik im Gutteil-Referenzspritzgießzyklus, der für die weitere Prozessführungen von hoher Bedeutung ist.

Eine weitere bevorzugte Ausführungsform ist dadurch gekennzeichnet, dass bei einem Spritzgießwerkzeug, welches mehrere Werkzeuginnendrucksensoren aufweist, das Verfahren parallel für einen oder mehrere dieser Werkzeuginnendrucksensoren durchgeführt wird.

Falls in einem Spritzgießwerkzeug mehrere Werkzeuginnendrucksensoren vorhanden sind, so bietet es sich an, das Verfahren parallel für einen oder mehrere dieser Werkzeuginnendrucksensoren durchzuführen, d. h., dass für jeden Werkzeuginnendrucksensor der entsprechende Soll-Werkzeuginnendruckverlauf ermittelt wird und dann durch Führung des entsprechenden Nachdruckes im aktuellen Spritzgießzyklus diese Soll-Verläufe möglichst gut angenähert werden.

Eine weitere bevorzugte Ausführungsform ist dadurch gekennzeichnet, dass während der Nachdruckphase des aktuellen Spritzgießzyklus, der sich aus der berechneten Nachdruckänderung ergebende Ist-Werkzeuginnendruck $p_{wkz,act}$ gemessen wird und mit dem Soll-Werkzeuginnendruck $p_{wkz,soll}$ verglichen wird.

Zur Verifikation der Prozessführung ist es zweckmäßig, den Ist-Werkzeuginnendruck des aktuellen Spritzgießzyklus zu messen und mit dem Soll- Werkzeuginnendruck für diesen Zyklus zu vergleichen.

Eine weitere bevorzugte Ausführungsform ist dadurch gekennzeichnet, dass das Verfahren für Nachdruckphasen mit mehreren Profilstufen angewandt wird.

Das Verfahren ist auch besonders dafür geeignet, Nachdruckphasen mit mehreren Profilstufen zu verwenden. Insbesondere kann das erfindungsgemäße Verfahren mit Vorteil sowohl für jede Profilstufe einzeln wie auch für einen Durchschnitt über die Profilstufen angewandt werden.

Eine weitere bevorzugte Ausführungsform ist dadurch gekennzeichnet, dass zur Ermittlung eines aktuellen Umschaltpunktes im aktuellen Spritzgießzyklus der Umschaltwerkzeuginnendruck $p_{wkz,umschalt,ref}$ des Gutteil-Referenzspritzgießzyklus am Umschaltpunkt des Gutteil-Referenzspritzgießzyklus ermittelt/ausgelesen wird, anschließend ein zum Umschaltwerkzeuginnendruck $p_{wkz,umschalt,ref}$ des Gutteil-Referenzspritzgießzyklus korrespondierender Soll-Umschaltwerkzeuginnendruck $p_{wkz,umschalt,soll}$ auf der Soll-Werkzeuginnendruckkurve $p_{wkz,soll}(t)$ des aktuellen Spritzgießzyklus ermittelt wird und sobald im aktuellen Spritzgießzyklus $p_{wkz,act} \geq p_{wkz,umschalt,soll}$ gilt, von der Einspritzphase in die Nachdruckphase umgeschalten wird.

Mit dem erfindungsgemäßen Verfahren kann insbesondere in einfacher Art und Weise auch ein gegenüber dem Gutteil-Referenzspritzgießzyklus geänderter Umschaltwerkzeuginnendruck bestimmt werden, der insbesondere werkzeugspezifische und/oder schmelzespezifische Änderungen berücksichtigt. Nach Erreichen eines neuen Soll- Umschaltwerkzeuginnendruckes wird im aktuellen Spritzgießzyklus umgeschalten, so dass auch diesbezüglich eine entsprechend genaue Prozessanpassung stattfindet.

In dieser Ausführungsform der Erfindung wird ausgehend von Soll-Umschaltwerkzeuginnendruck zusätzlich auf den zugehörigen Umschaltmassedruck im aktuellen Spritzgießzyklus zurückgerechnet und bei diesem ermittelten Umschaltmassedruck umgeschaltet. Dies ermöglicht eine Umschaltung nur aufgrund einer Massedruckmessung.

Eine weitere bevorzugte Ausführungsform ist dadurch gekennzeichnet, dass zur Erreichung des Soll-Werkzeuginnendruckverlaufes $p_{wkz,soll}(t)$ im aktuellen Spritzgießzyklus der hierfür erforderliche Soll-Nachdruckverlauf $p_{masse,Hld,soll}(t)$ im aktuellen Spritzgießzyklus nach einer der nachfolgenden Formeln

a)

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) = p_{wkz,soll}(t) \cdot k_2^{-1}$$

oder

b)

$$p_{masse,Hld,soll}(t) = \frac{p_{wkz,soll}(t)}{p_{wkz,ref,avg}} \cdot p_{masse,Hld,ref,avg} = p_{wkz,soll}(t) \cdot k_2^{-1}$$

oder

c)

$$p_{masse,Hld,soll}(t) = \frac{p_{wkz,soll}(t)}{p_{wkz,ref}} \cdot p_{masse,Hld,ref} = p_{wkz,soll}(t) \cdot k_2^{-1}$$

berechnet wird, wobei $p_{masse,Hld,ref}$ ein Nachdruckparameter, $p_{masse,Hld,ref}(t)$ der Nachdruckverlauf, $p_{masse,Hld,ref,avg}$ ein Mittelwert des Nachdruckes und $p_{wkz,ref,avg}$ ein Mittelwert des Werkzeuginnendruckes des Gutteil-Referenzspritzgießzyklus ist.

Die angegebenen Formeln beziehen sich auf die zur Erreichung des Soll-Werkzeuginnendruckverlaufes notwendigen/hinreichenden Massedruckverläufe in der Nachdruckphase. Hierfür eignen sich sowohl die entsprechenden Druckintegrale (Formel a)), Durchschnittswerte (Formel b)) oder Einzelwerte (Formel c)), wobei von a) nach c) die Genauigkeit etwas abnimmt, dafür aber der Rechenaufwand ebenso abnimmt.

Eine weitere bevorzugte Ausführungsform ist dadurch gekennzeichnet, dass während der Nachdruckphase des aktuellen Spritzgießzyklus die Ist-Werkzeuginnendruckkurve $p_{wkz,act}(t)$ des aktuellen Spritzgießzyklus mit der Soll-Werkzeuginnendruckkurve $p_{wkz,soll}(t)$ verglichen wird und der Nachdruckverlauf $p_{masse,Hld,act}(t)$ während des aktuellen Spritzgießzyklus oder in einem nachfolgenden Spritzgießzyklus iterativ so angepasst wird, dass eine Abweichung über mehrere Zyklen ausgeglichen wird.

Für den Fall, dass eine Abweichung des Ist- Werkzeuginnendruckverlaufes von Soll-Werkzeuginnendruckverlauf festgestellt wird, ist es zweckmäßig, diesen iterativ anzunähern. Insbesondere von Zyklus zu Zyklus die Abweichung zwischen Ist-Werkzeuginnendruckverlauf und Soll-Werkzeuginnendruckverlauf iterativ zu verkleinern.

Eine weitere bevorzugte Ausführungsform ist dadurch gekennzeichnet, dass der Soll-Nachdruckverlauf $p_{masse\,Hld,soll}(t)$ des aktuellen Spritzgießzyklus berechnet wird nach der Formel

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) + \left(p_{wkz,soll}(t) - p_{wkz,act}(t)\right) \cdot k_3$$

wobei $k_3$ ein Regelfaktor ist.

Zur iterativen Annäherung ist es besonders zweckmäßig, eine Differenz zwischen einem Soll-Werkzeuginnendruckverlauf und einem Ist-Werkzeuginnendruckverlauf zu bilden und diesen mittels eines Regelfaktors $K_3$ in die Be-stimmung des Nachdruckes einfließen zu lassen.

Weiterhin wird die Aufgabe erfindungsgemäß mit einer Spritzgießmaschine gelöst, welche eingerichtet und ausgebildet ist, das Verfahren nach einem oder mehreren der Ansprüche 1 bis 21 durchzuführen.

In dem erfinderischen Verfahren wird mittels mindestens einem oder vorzugsweise mehreren Werkzeuginnendrucksensoren der Füllvorgang einer oder mehrerer Kavitäten gemessen. Während der Füllung speichert ein Algorithmus bevorzugt mindestens einen der folgenden Parameter: einen zeitlichen Verlauf des Werkzeuginnendrucksignals, den Zeitpunkt, an dem der Werkzeuginnendruck durch das Vorbeiströmen der Kunststoffschmelze ansteigt, einen Maximalwert des Drucks, sowie eine Druckfläche unter der Kurve. Dadurch wird abgeleitet, bei wie viel Prozent des Füllvolumens bzw. wo auf dem Fließweg der oder die Sensoren platziert sind.

Die Parameter, die sich aus dem Algorithmus ergeben, werden während eines oder mehrerer Lernzyklen in der Spritzgießmaschine als Referenz zeitdiskret in wegabhängigen Druckpunkten gespeichert.

Tritt nun eine Viskositätsänderung der Kunststoffschmelze, z.B. durch einen Chargenwechsel, auf, so wird dies während der Einspritzphase gemessen. Die durch Viskositätsänderung sich ableitende Druckänderung in der Einspritzphase wird im erfinderischen Verfahren ermittelt, woraus dieses einen neuen viskositätsabhängigen Soll-Werkzeuginnendruckverlauf für die Nachdruckphase berechnet. Über den Soll-Werkzeuginnendruckverlauf wird während der Einspritzphase ein neuer Umschaltwerkzeuginnendruck für den gerade aktiven Zyklus berechnet und somit viskositätsabhängig umgeschaltet.

Viskositätsbedingt entsteht über den Fließweg der Kunststoffschmelze in der Kavität ein höherer oder niedrigerer Druckabfall von der maschinenseitigen Einspritzdüse bis zum Fließwegende der Kavität.

Das heißt, in dem erfindungsgemäßen Verfahren wird auf Grund einer Änderung des Druckbedarfs (Viskosität) in der Einspritzphase ein neuer Soll-Werkzeuginnendruckverlauf für einen oder mehrere Werkzeuginnendrucksensoren für die Nachdruckphase berechnet. Somit werden die Nachdruckhöhe und bevorzugt der Umschaltzeitpunkt im aktuellen Zyklus über das beschriebene Verhältnis angepasst. Des Weiteren werden für die Berechnung der Nachdruckhöhe materialspezifische Faktoren herangezogen, die das Schwindungs- und Abkühlverhalten der unterschiedlichen Kunststoffe berücksichtigen. In der Nachdruckphase wird der sich aus der Nachdruckänderung ergebende Werkzeuginnendruck mit dem vorherberechneten Soll-Werkzeuginnendruck verglichen. Werden Abweichungen festgestellt, wird über mehrere Iterationen die Nachdruckhöhe z. B. über den Regelungszyklus einen Verstärkungsfaktor $k_3$ zwischen Viskositäts- und Druckänderung in der Einspritzphase für den nächsten Zyklus angepasst. Dieses Verfahren wird bevorzugt ebenfalls für Einspritz- und Nachdruckphasen mit mehreren Profilstufen angewandt.

Die viskositätsabhängige Neuberechnung des Soll-Werkzeuginnendruckverlaufs des erfindungsgemäßen Verfahrens wird des Weiteren für die Verschiebung des Umschaltpunktes genutzt, indem der neu berechnete Druck an der Umschaltposition der Schnecke aus dem Referenzzyklus als Umschaltbedingung festgelegt wird. Dadurch resultiert eine zeitliche, kompressionsbedingte Verschiebung des Werkzeuginnendrucks. Außerdem sind RSP-Schwankungen über einen Massedruckanstieg ebenfalls berücksichtigbar.

Sollten im Werkzeug mehr als ein Werkzeuginnendruck-Sensor verbaut sein, so kann der Druckabfall über die Fließweglänge ermittelt werden. Dabei wird bevorzugt auf den Sensor, der möglichst am Ende des Fließwegs platziert ist, geregelt.

Im Folgenden wird die Erfindung anhand der Figuren beispielhaft näher erläutert. Es zeigen:

Figur 1: beispielhafte Darstellung einer komprimierten spritzgießfähigen Masse am Umschaltpunkt für eine niederviskosere ("dünnflüssigere") Kunststoffschmelze (MFI 11) und eine höherviskosere ("zähflüssigere") Kunststoffschmelze (MFI 6);

Figur 2: schematisch einen Massedruck- und Werkzeuginnendruckverlauf zweier Zyklen mit gleichen Prozesseinstellungen aber spritzgießfähigen Massen (Materialien) mit unterschiedlichen Viskositäten (MFI- Werten);

Figur 3: schematisch Massedruck- und Werkzeuginnendruckverläufe für zwei unterschiedlich viskose Schmelzen (Polypropylen MFI 6 und Polypropylen MFI 11) mit besonderer Veranschaulichung eines Messbereichs, in dem der Massedruck in der Einspritzphase gemessen wird und somit die Fließfähigkeit (Viskosität) der Kunststoffmasse auswertbar ist bzw. ausgewertet wird;

Figur 4: einen Referenz-Werkzeuginnendruck aus einem Gutteil-Referenzspritzgießzyklus und eine berechnete Soll-Werkzeuginnendruckkurve, die sich für ein höherviskoses Material ergeben wird;

Figur 5: zwei beispielhafte Massedruckverläufe für PP MFI 6 und PP MFI 11 während der Einspritzphase und deren Werkzeuginnendruckverläufe in der Nachdruckphase mit besonderer Veranschaulichung eines geänderten Umschaltpunktes und einer geänderten Nachdruckhöhe.

Figur 6: zeigt einen Massedruck und Werkzeuginnendruckverlauf einer niederviskosen bzw. höherviskosen Kunststoffschmelze (PP MFI 11 und PP MFI 6) mit für das erfinderische Verfahren benötigten Mess- und Regelgrößen;

Figur 7: ein Ablaufdiagramm des erfindungsgemäßen Verfahrens.

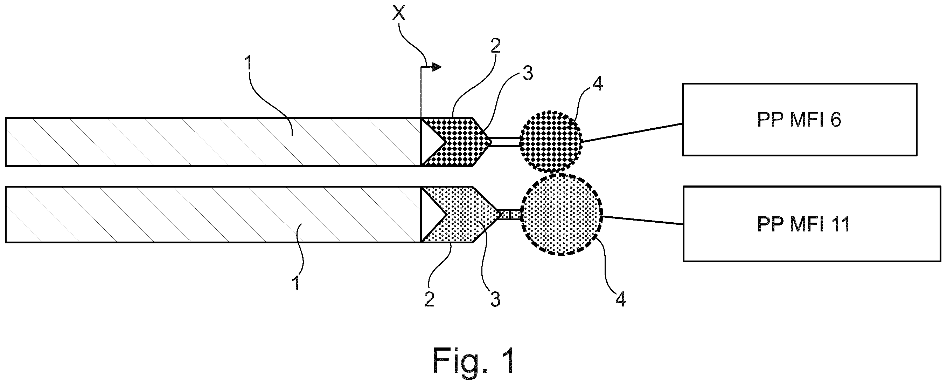

Grundsätzliche Zusammenhänge zwischen Druck, Viskosität und Füllvolumen einer Kavität im Spritzgießprozess sollen nunmehr nachfolgend anhand der Figuren 1 und 2 erläutert werden.

In Figur 1 ist stark schematisiert eine Schnecke 1 in einem Schneckenzylinder 2 einer Kunststoffspritzgießmaschine (nicht gezeigt) dargestellt. In der oberen Darstellung in Figur 1 befindet sich in einem Schneckenvorraum 3 und schematisiert dargestellt in einer Kavität 4 ein Polypropylenmaterial (PP-Material) mit einem Schmelzfließindex (melt flow index MFI) von 6. Dies stellt ein relativ hoch viskoses (dickflüssiges) Material im Schmelzezustand dar. Im unten dargestellten Beispiel der Figur 1 befindet sich im Schneckenvorraum 3 und in der Kavität 4 ebenfalls ein Polypropylen, welches in der Schmelze allerdings niedriger viskos (dünnflüssiger) ist und einen melt flow index-Wert MFI von 11 aufweist. Es wird deutlich, dass bei gleichen Schneckenpositionen X die Kavität 4 in dem Beispielfall des Polypropylens mit MFI=11 mehr Schmelzevolumen (Füllvolumen) enthält. Beim höher viskosen Material (Polypropylen MFI 6) ist ein erhöhter Druckbedarf notwendig, um die höher viskose Schmelze in die Kavität 4 zu verbringen. Insofern wird bei einem höheren Druckniveau die Schmelze des PP MFI 6-Materials stärker komprimiert, wodurch im Ergebnis ein geringeres Füllvolumen in der Kavität 4 ankommt als bei einem niedriger viskosen PP MFI 11-Material. Dies führt übertragen auf einen realen Spritzgießprozess dazu, dass die Kavität eines Formwerkzeuges bei ansonsten gleichen Parametern in einem Spritzgießprozess mit höher viskosem Material weniger vollständig gefüllt wird als mit einem niedriger viskosen Material.

Ebenso resultiert aus dem Viskositätsunterschied zweier Materialien bei ansonsten konstanter Einspritzgeschwindigkeit und Geometrie, etc eine Änderung des Massedruckverlaufes bzw. des Werkzeuginnendruckverlaufes. Als Massedruckverlauf bzw. als Massedruck werden erfindungsgemäß Drücke bzw. Druckverläufe verstanden, die sich in einem Schneckenvorraum 3 während eines Prozesses bilden. Solche Massedrücke bzw. solche Massedruckverläufe werden im Folgenden zeitlich einer Einspritzphase eines Spritgießprozesses zugeordnet. Die Begriffe "Werkzeuginnendruck" und "Werkzeuginnendruckverlauf" beziehen sich auf Drücke bzw. Druckverläufe gemessen in einer Kavität oder allgemein in einem Inneren eines Formwerkzeuges. Zeitlich beziehen sich die Begriffe "Werkzeuginnendruck" und "Werkzeuginnendruckverlauf" im Rahmen dieser Beschreibung überwiegend auf die Nachdruckphase eines Spritzgießprozesses. Unter dem Begriff "Nachdruck/Nachdruckverlauf" wird, sofern nichts anderes angegeben ist, grundsätzlich der Massedruck während einer Nachdruckphase verstanden, also derjenige Druck der Schmelze, die sich im Schneckenvorraum 3 befindet.

Anhand von Figur 2 wird deutlich, dass ein Massedruckverlauf des niedriger viskosen Schmelzematerials PP MFI 11 während der gesamten Einspritzphase des dargestellten Spritzgießprozesses unterhalb des Massedrucks bzw. des Massedruckverlaufs eines höher viskosen Schmelzematerials aus PP MFI 6-Material verläuft. Umgekehrt ist in der Nachdruckphase ein Werkzeuginnendruckverlauf des dünnflüssigeren (niedriger viskosen) Materials PP MFI 11 während der gesamten Nachdruckphase oberhalb des Werkzeuginnendruckes bzw. des Werkzeuginnendruckverlaufes einer Schmelze aus einer höher viskosen Material MFI 6 angeordnet. Insbesondere fällt auf, dass an einem Umschaltpunkt, welcher in der Figur 2 durch eine vertikale gestrichelte Linie dargestellt ist, der Werkzeuginnendruck mit dem niedriger viskosen Material PP MFI 11 deutlich stärker ansteigt als mit dem höher viskosen Material PP MFI 6. Aus diesen deutlichen Unterschieden in den Druckverläufen resultieren unterschiedliche Formfüllungen und hierdurch stark unterschiedliche Bauteilqualitäten. Ziel ist es, die Formteilfüllung zu optimieren und unabhängig von der Viskosität des verwendeten Schmelzematerials eine prozesssichere vollständige Füllung der Formwerkzeuge und somit ein konstantes Gutteilvolumen zu gewährleisten.

Im Folgenden sei beispielhaft erwähnt, dass die ermittelten Druckkurven, also der Massedruck (Massedruckverlauf) und der Werkzeuginnendruck (Werkzeuginnendruckverlauf) des nieder viskosen Polypropylens (PP MFI 11) für die weitere Erläuterung als Referenzkurve R verwendet wird, von der aus beispielsweise erfindungsgemäße Anpassungen vollzogen werden. Somit steigt unter der Annahme, dass die Kurven des nieder viskosen Polypropylens (PP MFI 11) als Referenzkurven in einem Referenzzyklus gelernt wurden, beispielsweise die Viskosität durch eine Chargenänderung auf ein Polypropylen mit höherer Viskosität analog zum Verlauf des PP MFI 6 an.

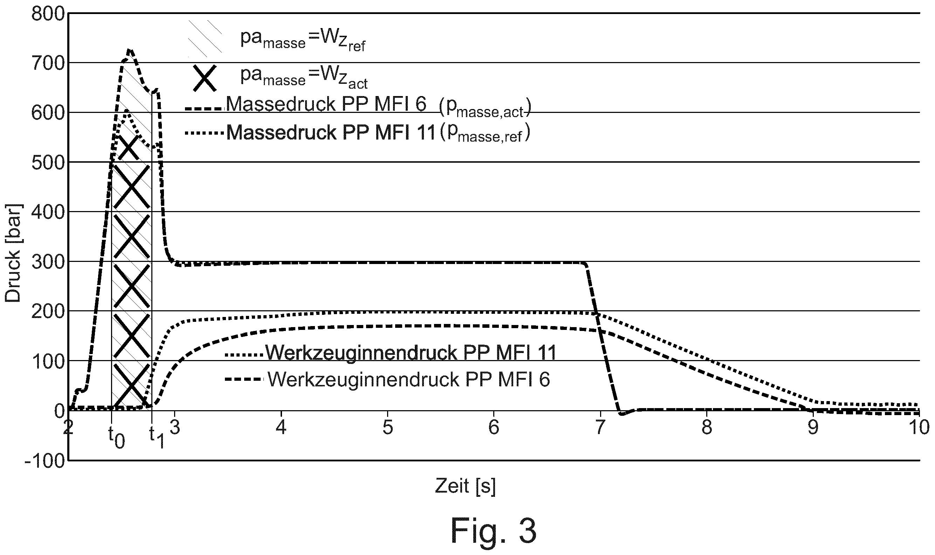

Figur 3 zeigt für ein PP MFI 6 (höher viskoses Polypropylen) in gestrichelter Linie den Verlauf des Massedrucks $p_{masse}$ während der Einspritz- und der Nachdruckphase. Außerdem zeigt das Diagramm gemäß Figur 3 den Masse-druckverlauf $p_{masse}$ eines PP MFI 11 (niedriger viskose Polypropylen-Schmelze) in dunkel gepunkteter Linie, während der Einspritz- und der Nachdruckphase.

Eine enger schraffierte Fläche zwischen Zeitgrenzen $t_0$ und $t_1$ repräsentiert eine Massedruckfläche $p_{a,masse}$ unterhalb des Massedruckverlaufes des PP MFI 6. Diese Massedruckfläche entspricht der Einspritzarbeit $W_{z,ref}$ in den Grenzen zwischen $t_0$ und $t_1$, wobei die untere Zeitgrenze $t_0$ nach dem Schließen einer Rückstromsperre liegt und die obere Zeitgrenze $t_1$ noch vor einem Umschaltpunkt liegt.

In den gleichen Grenzen $t_0$ und $t_1$ zeigt eine kreuzschraffierte Fläche in Figur 3 eine Massedruckfläche $p_{a,masse}$ des PP MFI 11, also der dünnflüssigeren Polypropylen-Schmelze. Diese Fläche entspricht der Einspritzarbeit $W_{z,act}$ und ist in den Grenzen $t_0$ bis $t_1$ kleiner als die Einspritzarbeit $W_{z,ref}$ der dickflüssigeren (höher viskosen) PP-MFI-6-Schmelze.

Im weiteren Verlauf zeigt die Massedruckkurve der beiden PP-Schmelzen MFI 6 und MFI 11 während der Nachdruckphase gleichen Druckverlauf (Stand der Technik). Hierdurch ergeben sich im unteren Diagrammbereich unterschiedlich verlaufende Werkzeuginnendrücke. Die hell gepunktete Linie repräsentiert den Werkzeuginnendruckverlauf $p_{wkz}(t)$ der niedriger viskosen PP-Schmelze (MFI 11). Dieser Verlauf liegt gegenüber einem Werkzeuginnendruckverlauf einer PP-MFI-6-Schmelze, welche dickflüssiger ist und mit einer dunklen gestrichelten Linie dargestellt ist, auf einem höheren Niveau.

Zur Ermittlung einer Massedruckänderung $k_1$ während der Einspritzphase beim Übergang von einer ersten Schmelze auf eine zweite, anders viskose Schmelze wird nunmehr zweckmäßiger Weise ein Quotient aus der Einspritzarbeit $W_{z,act}$ eines aktuellen Spritzgießzyklus und der Einspritzarbeit $W_{z,ref}$ eines Gutteil-Referenzspritzgießzyklus gebildet. Im vorliegenden Beispiel soll z. B. der Massedruckverlauf der PP-MFI-11-Schmelze als Referenzmassedruckverlauf $p_{masse,ref}$ angesehen werden und der Massedruckverlauf $p_{masse,act}$ der PP-MFI-6-Schmelze als der Massedruckverlauf $p_{masse,act}$ des aktuellen Spritzgießzyklus angesehen werden.

Erfindungsgemäß wird nunmehr mindestens unter Berücksichtigung der Massedruckänderung $k_1$, bevorzugt zusätzlich unter Berücksichtigung einer Druckübertragungscharakteristik $k_2$ und einem materialabhängigen Faktor $k_{mat}$ aus dem Werkzeuginnendruck des Gutteil-Referenzspritzgießzyklus (hier: Werkzeuginnendruck der PP-MFI-11-Schmelze) auf einem Soll-Werkzeuginnendruckverlauf $p_{wkz,soll}(t)$ für die im aktuellen Spritzgießzyklus zu verarbeitende, dickflüssigere PP-MFI-6-Schmelze umgerechnet.

Zur Ermittlung der Druckübertragungscharakteristik des verwendeten Werkzeuges wird der Faktor $k_2$ aus einem Verhältnis der Druckintegrale über den Werkzeuginnendruckverlauf während mindestens eines Teils der Nachdruckphase $p_{wkz,md}(t)$ und über den Massedruck $p_{masse,Hld}(t)$ jeweils in den Grenzen $t_2$ bis $t_3$ ermittelt. $t_2$ ist dabei ein Zeitpunkt an oder nach dem Umschaltpunkt. $t_3$ ist ein Zeitpunkt nach $t_2$ und vor dem Ende der Nachdruckphase. Bevorzugt wird hier für $t_3$ ein Zeitpunkt $t_{wkz,max}$ des maximalen Werkzeuginnendruckes $p_{wkz,masse}$ verwendet.

Alternativ kann der Faktor $k_2$ auch als Quotient aus Durchschnittswerten des Werkzeuginnendruckes $p_{wkz,Hld,avg}$ und des Massedrucks $p_{masse,Hld,avg}$ während der Nachdruckphase gebildet werden.

Weiter alternativ können auch einzelne Druckwerte dieser Verläufe verwendet werden. Ein materialspezifischer Faktor $k_{mat}$ wird empirisch ermittelt und bringt materialspezifische Eigenschaftsänderungen einer Schmelze des aktuellen Spritzgießzyklus gegenüber der Schmelze des Gutteil-Referenzspritzgießzyklus ein.

Hieraus kann dann, nach der Formel

$$p_{wkz,soll}(t) = p_{wkz,ref}(t) \cdot \frac{k_{mat}}{k_1 \cdot k_2}$$

berechnet werden. Ein solcher Soll-Werkzeugdruckverlauf liegt bei einem Übergang von einer niedrigerviskosen Schmelze als Referenzschmelze hin zu einer dickflüssigeren (höher viskosen) Schmelze eines aktuellen Spritzgießzyklus tendenziell oberhalb eines Werkzeuginnendruckverlaufes, wenn der Nachdruck unverändert bliebe.

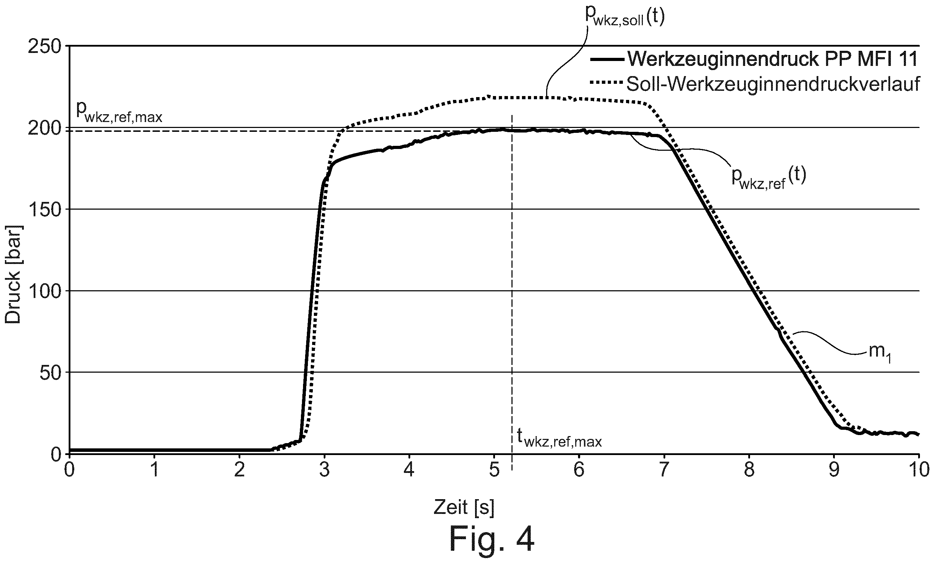

Nach Erhalt des Soll-Werkzeuginnendruckverlaufes $p_{wkz,soll}(t)$ kann nunmehr über die Druckübertragungscharakteristik $k_2$ ein zu dem Soll-Werkzeuginnendruckverlauf $p_{wkz,soll}(t)$ korrespondierender Nachdruckverlauf $p_{masse,Hld,act}(t)$ berechnet werden. Hierzu kann mit geringem Rechenaufwand der entsprechende Soll-Nachdruck durch Division des Soll-Werkzeuginnendruckverlaufes durch den Faktor $k_2$ ermittelt werden. Dies gilt sowohl für die Verwendung von Druckintegralen über einen Teilbereich des Werkzeuginnendrucks und des Massedrucks wie auch für deren Mittelwerte oder gar Einzelwerte. Hieraus ergibt sich dann ein in der Nachdruckphase des aktuellen Spritzgießzyklus abzufahrender Nachdruckverlauf $p_{masse,Hld,act}(t)$, der im beschriebenen Beispiel oberhalb des sich bei unverändertem Werkzeuginnendruck erbebenden Nachdruckes liegt (vgl. Figur 4 zu der Ermittlung des Soll-Werkzeuginnendruckverlaufes $p_{wkz,soll}(t)$).

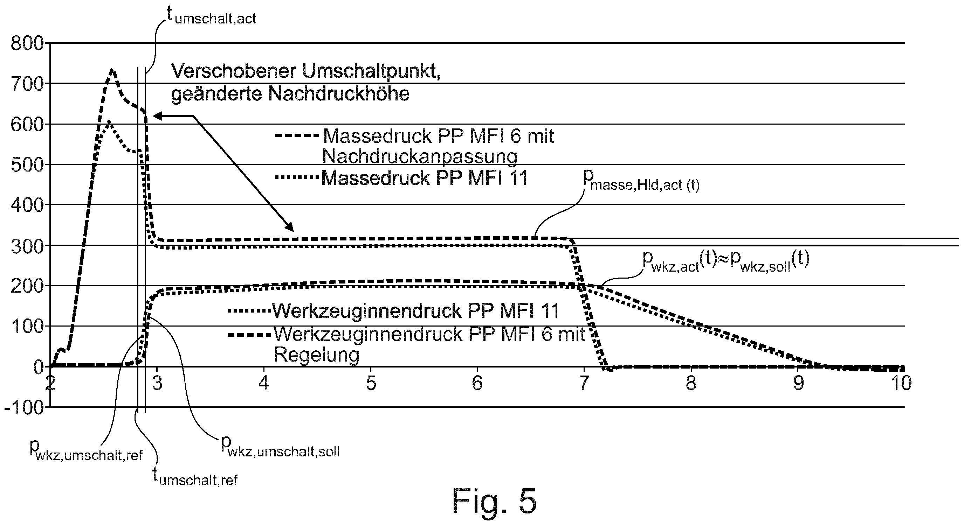

Der vorbeschriebene Vorgang ist auch in Figur 5 ersichtlich. Zusätzlich kann aus Figur 5 erkannt werden, dass ein Umschaltzeitpunkt des Gutteil-Referenzspritzgießzyklus ($t_{umschalt,ref}$) bei einem Übergang vom Gutteil-Referenzspritzgießzyklus (PP-MFI-11-Schmelze) zum aktuellen Spritzgießzyklus (PP-MFI-6-Schmelze) zeitlich nach hinten verschoben wird auf einen Zeitpunkt $t_{umschalt,act}$. Um die Umschaltzeit des aktuellen Spritzgießzyklus $t_{umschalt,act}$ zu ermitteln, wird im Gutteil-Referenzspritzgießzyklus der Werkzeuginnendruck $p_{wkz,umschalt,ref}$ am Umschaltpunkt als Ausgangspunkt gewählt. Dieser Wert für den Werkzeuginnendruck im Gutteil-Referenzspritzgießzyklus am Umschaltpunkt wird in erfindungsgemäßer Art und Weise auf einen Soll-Werkzeuginnendruck $p_{wkz,umschalt,soll}$ umgerechnet und bei Erreichen dieses Werkzeuginnendruckes $p_{wkz,umschalt,soll}$ im aktuellen Spritzgießzyklus wird im aktuellen Spritzgießzyklus umgeschaltet. Hieraus ergibt sich dann die Umschaltzeit $t_{umschalt,act}$. Der Nachdruckverlaufes $p_{masse,Hld,act}(t)$ wird nach dem Umschalten derart abgefahren, dass der sich hieraus ergebende Ist-Werkzeuginnendruckverlauf $p_{wkz,act}(t)$ des aktuellen Spritzgießzyklus möglichst nahe, idealerweise genau dem Soll-Werkzeuginnendruckverlauf $p_{wkz,soll}(t)$ folgt.

Für den Fall, dass ein derartig genaues Treffen des Soll-Werkzeuginnendrucks $p_{wkz,soll}(t)$ nicht ganz gelingt, wird gegebenenfalls in darauffolgenden Zyklen dies iterativ angenähert.

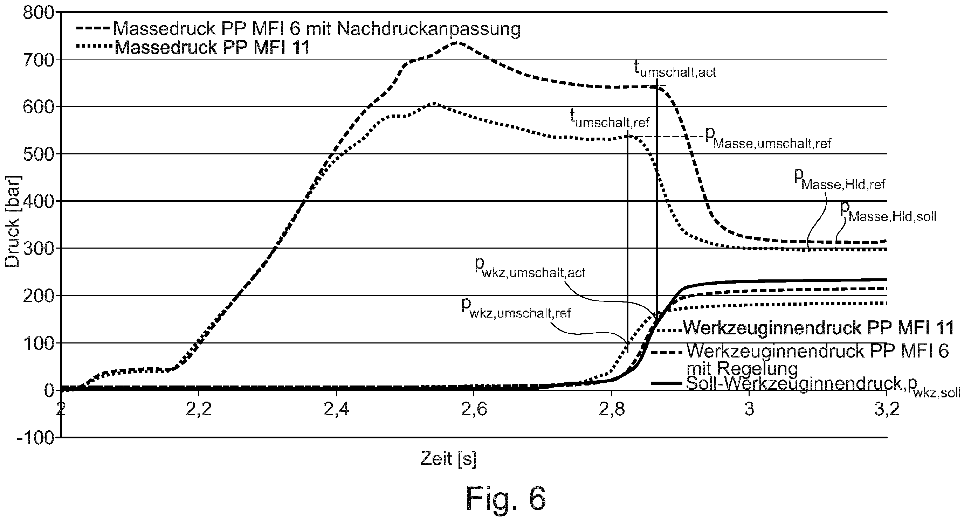

Diese Vorgehensweise und auch die vorbeschriebene Vorgehensweise zur Ermittlung des Umschaltpunktes im aktuellen Spritzgießzyklus ausgehend vom Umschaltpunkt des Gutteil-Referenzspritzgießzyklus ist auch aus Figur 6 ersichtlich. Die eingezeichneten Druckverläufe über der Zeit in Figur 6 sind hinsichtlich ihrer Skalierung etwas weiter beabstandet gezeichnet, um zu verdeutlichen, dass erfindungsgemäß gerade nicht das Ziel verfolgt wird, den Werkzeuginnendruck durch geeignete Nachdruckanpassung möglichst gleich zu halten, obwohl unterschiedliche Schmelzen mit unterschiedlichen Materialeigenschaften verwendet werden, sondern gerade eine schmelzespezifische Anpassung auch unter Berücksichtigung von Druckübertragungscharakteristiken des Werkzeuges hinsichtlich des Werkzeuginnendruckes stattfindet und zur Erreichung dieses schmelze- und/oder druck-übertragungsabhängig ermittelten Soll-Werkzeuginnendruckes eine hierauf abgestimmte Nachdruckanpassung im erfindungsgemäßen Verfahren stattfindet.

Das erfindungsgemäße Verfahren ist für die Verwendung an elektro- und hydromechanischen Spritzgießmaschinen aller Baugrößen ausgelegt. Somit ist eine Verwendung in sämtlichen Neumaschinen und als Nachrüstung möglich. Voraussetzung ist mindestens ein in die Maschine integrierter Werkzeuginnendrucksensor.

Spritzgießmaschinen, die mit dem Verfahren betrieben werden, sind in der Lage negative Effekte von beispielsweise Chargenschwankungen auf die Formteilqualität automatisiert zu kompensieren. Ebenfalls werden negative Effekte auf die Formteilqualität beim Wideranfahren der Maschinen (nach Störungen oder Stillstand) durch die Berechnung des optimalen Soll-Werkzeuginnendruckverlaufs, bzw. daraus abgeleiteter Kennzahlen automatisiert kompensiert. Der Maschinenbediener muss weniger häufig in den Produktionsprozess eingreifen, um beispielsweise Einstellparameter manuell nachzuführen. Die Qualitätsunterschiede der einzelnen Formteile werden, auch bei sich ändernden Produktionsbedingungen, auf ein Minimum reduziert. Kosteneinsparungen durch die Automatisierung und die Prozesssicherheit sind die direkte Folge.

Durch eine gezielte Auswertung der Parameter an der Maschine lassen sich z. B. auch Störungen im Werkzeug oder der Werkzeugtemperierung identifizieren. Weiterhin besteht die Möglichkeit zwischen zwei Spritzgießmaschinen das Werkzeug wechseln zu können, ohne dass ein langwieriger Anfahr- und Anpassungsprozess zur Einstellung eines robusten Prozesspunktes nötig ist. Die Formteilqualität kann unabhängig von Maschine, Personal oder Rohstoff reproduziert werden, ohne dass eine teure Nachkontrolle nötig ist.

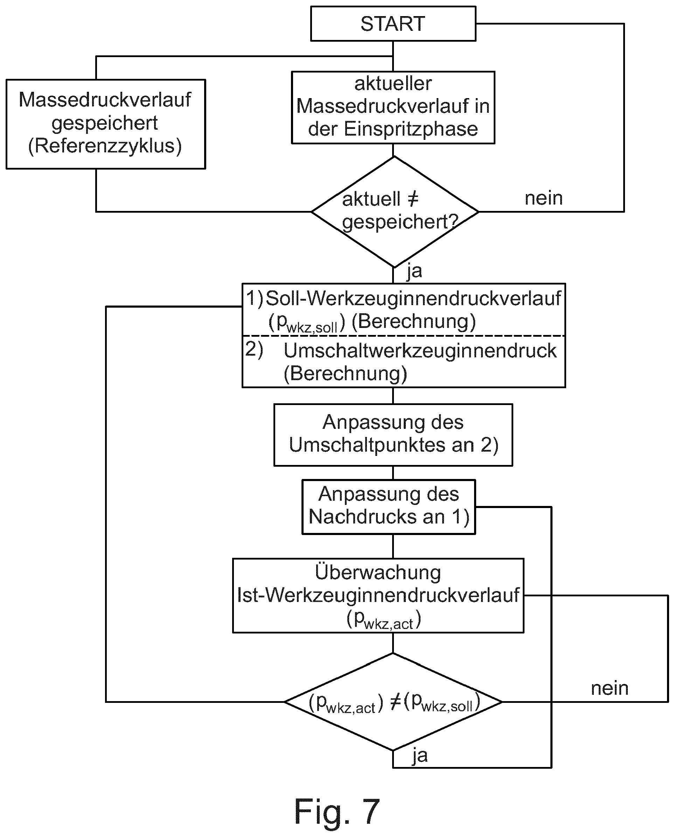

Im Folgenden wird die Erfindung beispielhaft anhand eines Ablaufdiagrammes gemäß Figur 7 näher erläutert.

Es existiert ein gespeicherter Massedruckverlauf $p_{masse,ref}(t)$, der aus einem Gutteil-Referenzspritzgießzyklus stammt. Weiterhin wird ein aktueller Massedruckverlauf $p_{masse,act}(t)$ während der Einspritzphase eines Ist-Spritzgießzyklus erfasst, zum Beispiel gemessen.

Der Referenz-Massedruckverlauf $p_{masse,ref}(t)$ und der aktuelle Massedruckverlauf $p_{masse,act}(t)$ werden verglichen. Wenn der Ist-Massedruckverlauf $p_{masse,act}(t)$ ungleich dem Referenz-Massedruckverlauf $p_{masse,ref}(t)$ ist oder der Unterschied einen gewissen Schwellenwert unterschreitet wird der Spritzgießzyklus hinsichtlich seines weiteren Verlaufs nicht abgeändert, Überschreitet der Unterschied zwischen dem Referenz-Massedruckverlauf $p_{masse,ref}(t)$ und dem Ist-Massedruckverlauf $p_{masse,act}(t)$ einen bestimmten Grenzwert, so wird zunächst in Abhängigkeit des Quotienten ein Soll-Werkzeuginnendruckverlauf $p_{wkz,soll}(t)$ berechnet. Dieser Soll-Werkzeugdruckinnenverlauf $p_{wkz,soll}(t)$ soll in der Nachdruckphase des aktuellen Spritzgießzyklus möglichst genau erreicht werden. Des Weiteren wird bevorzugt als zweite Maßnahme ein Umschaltwerkzeuginnendruck $p_{wkz,umschalt}$ berechnet, der ebenfalls von der Höhe des Quotienten des Referenz-Massedruckverlaufs $p_{masse,ref}(t)$ und des Ist-Massedruckverlaufs $p_{masse,act}(t)$ in der Einspritzphase abhängt. Nach diesen Berechnungen wird der Nachdruck $p_{masse,Hld}$ derart angepasst, dass der Soll-Werkzeuginnendruckverlauf $p_{wkz,soll}(t)$ möglichst genau abgefahren wird. Ebenfalls wird die Anpassung des Umschaltpunktes vorgenommen, sodass bei dem berechneten Umschaltwerkzeuginnendruck $p_{wkz,umschalt}$ umgeschaltet wird. Der Ist-Werkzeuginnendruckverlauf $p_{wkz,act}(t)$ während der Nachdruckphase wird überwacht (gemessen). Sofern der Ist-Werkzeuginnendruckverlauf $p_{wkz,act}(t)$ unterschiedlich zum Soll-Werkzeuginnendruckverlauf $p_{wkz,soll}(t)$ ist oder einen gewissen Grenzwert unterschreitet, erfolgt keine weitere Anpassung des Nachdruckes $p_{masse,Hld}$ im nächsten Zyklus, das heißt der nächste Zyklus wird mit dem gleichen Werkzeuginnendruckverlauf gefahren wie der aktuelle Zyklus. Überschreitet die Differenz einen gewissen Grenzwert, so wird der Nachdruck im nächsten Zyklus iterativ angepasst, sodass möglichst spätestens nach einigen wenigen Zyklen der Soll-Werkzeuginnendruckverlauf $p_{wkz,soll}(t)$ erreicht wird.

**Bezugszeichenliste**

| | |
|---|---|
| 1 | Schnecke |
| 2 | Zylinder |
| 3 | Schneckenvorraum |
| 4 | Kavität |
| $t_0$, $t_1$ | Zeitpunkte/Integrationsgrenzen |
| EP | Einspritzphase |
| MFI 11 | niederviskose Kunststoffschmelze |
| MFI 6 | hochviskose Kunststoffschmelze |
| PP MFI 11 | niederviskoses Polypropylen |
| $p_{wkz,ref}(t)$ | Werkzeuginnendruckverlauf im Gutteil-Referenzspritzgießzyklus |
| $p_{wkz,ref,max}$ | Maximaler Werkzeuginnendruck im Referenzzyklus |
| $t_{wkz,ref,max}$ | Zeitpunkt von $p_{wkz,ref,max}$ |
| $p_a$ | Werkzeuginnendruckfläche |
| $k_i$ | Korrekturfaktor |
| $W_z$ | Einspritzarbeit |
| $p_{wkz}$ | Werkzeuginnendruck |
| $t_{xfr,ref}$ | Umschaltzeitpunkt (Referenzzyklus) |
| $p_{masse,umschalt,ref}$ | Umschaltdruck (Referenzzyklus) |

| $p_{wkz,act}(t)$ | Ist-Werkzeuginnendruckverlauf |
| --- | --- |
| $p_{masse,Hld,ref}$ | Nachdruckhöhe (Referenzzyklus) |
| $p_{wkz,soll}(t)$ | Soll-Werkzeuginnendruckverlauf |
| $p_{masse,act}$ | Massedruckverlauf des aktuellen Spritzgießzyklus |
| $p_{masse,ref}(t)$ | Referenzmassedruckverlauf/ZMassedruckverlauf des Gutteil-Referenzspritzgießzyklus |
| $p_{masse,Hld,act}(t)$ | Nachdruckverlauf des aktuellen Spritzgießzyklus |
| $p_{wkz,act}$ | Ist-Werkzeuginnendruckverlauf des aktuellen Spritzgießzyklus |
| $p_{wkz,umschalt,act}$ | Umschaltwerkzeuginnendruck des aktuellen Spritzgießzyklus |
| $P_{masse}$ | Massedruck |
| $t_{inj,start}$ | Zeitpunkt des Beginns der Einspritzung |
| $t_{inj,umschalt}$ | Zeitpunkt des Umschaltens |
| $p_{masse,Hld}$ | Massedruck während der Nachdruckphase |
| $p_{wkz,Hld}$ | Werkzeuginnendruck während der Nachdruckphase |
| $t_{umschalt}$ | Zeitpunkt des Umschaltens |
| $t_{Hld,end}$ | Zeitpunkt des Endes der Nachdruckphase |
| $p_{wkz,max}$ | Maximaler Werkzeuginnendruck |
| $t_{wkz,max}$ | Zeitpunkt des maximalen Werkzeuginnendrucks |
| $p_{a,wkz}$ | Werkzeuginnendruckfläche |
| $p_{a,masse}$ | Massedruckfläche |
| $k_{mat}$ | Materialspezifischer Faktor |
| $k_i(k_1 k_2)$ | Prozessspezifische Faktoren |
| $p_{wkz,ref,umschalt}$ | Werkzeuginnendruck des früheren Spritzgießzyklus oder des Gutteil-Referenzspritzgießzyklus am Umschaltpunkt |
| $k_3$ | Regelfaktor |

**Patentansprüche**

1. Verfahren zum Betreiben einer Spritzgießmaschine mit den Schritten:

a) Nach einem in einer Lernphase gelernten Gutteil-Referenzspritzgießzyklus in einem aktuellen Spritzgießzyklus: Erkennen einer Massedruckänderung $k_1$ gegenüber einem Gutteil-Referenzmassedruck $p_{masse,ref}$ während zumindest eines Teils einer Einspritzphase des aktuellen Spritzgießzyklus durch Messung eines aktuellen Massedruckes $p_{masse,act}$ und Vergleich des aktuellen Massedruckes $p_{masse,act}$ mit dem Gutteil-Referenzmassedruck $p_{masse,ref}$,

b) Bestimmung eines Soll-Werkzeuginnendruckverlaufes $p_{wkz,soll}(t)$ für eine Nachdruckphase des aktuellen Spritzgießzyklus, wobei hierzu ein Werkzeuginnendruckverlauf $p_{wkz,ref}(t)$ des Gutteil-Referenzspritzgießzyklus wenigstens in Abhängigkeit der im Schritt a) erkannten Massedruckänderung $k_1$ angepasst wird und

c) der Nachdruckverlauf $p_{masse,Hld,act}(t)$ des aktuellen Spritzgießzyklus derart abgefahren wird, dass ein Ist-Werkzeuginnendruckverlauf $p_{wkz,act}(t)$ des aktuellen Spritzgießzyklus zumindest näher am Soll-Werkzeuginnendruckverlauf $p_{wkz,soll}(t)$ entlangläuft als ein gegenüber dem Gutteil-Referenzzyklus unveränderter Werkzeuginnendruckverlauf $p_{wkz,ref}(t)$.

2. Verfahren nach Anspruch 1,
**dadurch gekennzeichnet, dass**
das Verfahren vor, nach oder während Schritt b) weiterhin folgende Schritte aufweist:

b1) Bestimmung eines Soll-Umschaltwerkzeuginnendruckes $p_{wkz,umschalt,soll}$ für den aktuellen Spritzgießzyklus zumindest in Abhängigkeit der im Schritt a) erkannten Massedruckänderung, $k_1$

b2) Umschalten bei Erreichen des in Schritt b1) bestimmten Soll-Umschaltwerkzeuginnendrucks $p_{wkz,umschalt,soll}$

3. Verfahren nach einem der vorangegangenen Ansprüche,
**dadurch gekennzeichnet, dass**
die Bestimmung des Soll-Werkzeuginnendruckverlaufes $p_{wkz,soll}(t)$ zusätzlich in Abhängigkeit einer Druckübertragungscharakteristik zwischen einem Werkzeuginnendruck $p_{wkz}$ und einem korrespondierenden Massedruck $p_{masse}$ und/oder unter Verwendung eines materialspezifischen Faktors $k_{mat}$ bestimmt wird.

4. Verfahren nach einem der vorangegangenen Ansprüche,

**dadurch gekennzeichnet, dass**
im Gutteil-Referenzspritzgießzyklus und im aktuellen Spritzgießzyklus als Messgröße, die mit einer Verarbeitungsviskosität der Schmelze korreliert, ein Massedruckintegral während des Einspritzens ermittelt wird, insbesondere nach der Formel:

$$W_{z,act/ref} = \int_{t_0}^{t_1} p_{masse,act/ref}(t)\, dt,$$

wobei

$t_0$ ein Zeitpunkt des Beginns der Einspritzphase $t_{inj,start}$ oder ein Zeitpunkt nach dem Schließen einer Rück-stromsperre ist und
$t_1$ ein Zeitpunkt des Umschaltens $t_{inj,umschalt}$ ist oder ein Zeitpunkt der nach $t_0$ aber vor $t_{inj,umschalt}$ liegt.

5. Verfahren nach einem der vorangegangenen Ansprüche,
   **dadurch gekennzeichnet, dass**
   im Gutteil-Referenzspritzgießzyklus und/oder im aktuellen Spritzgießzyklus zusätzlich wenigstens eine der folgenden Größen bestimmt und bei Bedarf aufgezeichnet werden:

   - maximaler Werkzeuginnendruck $p_{wkz,max}$ sowie
   - der dazugehörige Zeitpunkt $t_{wkz,max}$,
   - einen Abfall des Werkzeuginnendrucks nach Erreichen des Maximums ($m_1$)
   - ein Werkzeuginnendruckmittel $p_{wkz,avg}$ und/oder ein Massedruckmittel $p_{masse,avg}$ in der Einspritzphase und/oder ein Werkzeuginnendruckmittel $p_{wkz,Hld,avg}$ und/oder ein Massedruckmittel $p_{masse,Hld,avg}$ in der Nachdruckphase,
   - eine Werkzeuginnendruckfläche $p_{a,wkz}$ in der Nachdruckphase, insbesondere als Druckintegral nach folgender Formel

   $$\int_{t_2}^{t_3} p_{wkz,Hld}(t)$$

   - eine Massedruckfläche $p_{a,masse}$ in der Nachdruckphase, insbesondere als Druckintegral nach folgender Formel

   $$\int_{t_2}^{t_3} p_{masse,Hld}(t)$$

   wobei: $p_{wkz,Hld}(t)$ der Werkzeuginnendruckverlauf in der Nachdruckphase ist,
   $p_{masse,Hld}(t)$ der Massedruckverlauf in der Nachdruckphase ist,
   $p_{wkz,avg}$ ein Mittelwert des Werkzeuginnendruckes während der Einspritzphase ist,
   $p_{masse,avg}$ ein Mittelwert des Massedruckes während der Einspritzphase ist,
   $p_{wkz,Hld,avg}$ ein Mittelwert des Werkzeuginnendruckes während der Nachdruckphase,
   $p_{masse,Hld,avg}$ ein Mittelwert des Massedrucks in der Nachdruckphase ist,
   $t_2$ ein Zeitpunkt am oder nach dem Umschaltpunkt, insbesondere der Umschaltzeitpunkt ist und
   $t_3$ ein Zeitpunkt nach $t_2$, z.B. der Zeitpunkt des Endes der Nachdruckphase $t_{Hld,End}$ oder ein Zeitpunkt vor dem Ende der Nachdruckphase, insbesondere der Zeitpunkt $t_{wkz,max}$ des maximalen Werkzeuginnendruckes des jeweiligen Zyklus ist.

6. Verfahren nach einem der vorangegangenen Ansprüche,
   **dadurch gekennzeichnet, dass**
   als Massedruckänderung $k_1$ ein Verhältnis des Druckintegrals während des Einspritzens im aktuellen Spritzgießzyklus und des Druckintegrals während des Einspritzens des Gutteil-Referenzspritzgießzyklus ermittelt wird, insbesondere nach der Formel

$$k_1 = W_{z,act}/W_{z,ref}$$

oder

als Massedruckänderung $k_1$ ein Verhältnis des Mittelwertes des Massedrucks während des Einspritzens im aktuellen Spritzgießzyklus und des Mittelwertes des Massedrucks während des Einspritzens des Gutteil-Referenzspritzgießzyklus ermittelt wird, insbesondere nach der Formel

$$k_1 = p_{masse,Hld,avg}/p_{masse,ref,avg}$$

oder als Massedruckänderung $k_1$ ein Verhältnis eines oder mehrerer Druckeinzelwerte während des Einspritzens im aktuellen Spritzgießzyklus und während des Einspritzens des Gutteil-Referenzspritzgießzyklus ermittelt wird, insbesondere nach der Formel

$$k_1 = p_{masse,act}/p_{masse,ref}.$$

7. Verfahren nach einem der vorangegangenen Ansprüche,
   **dadurch gekennzeichnet, dass**
   als eine Druckübertragungscharakteristik Abhängigkeit ($k_2$) zwischen Werkzeuginnendruck $p_{wkz}$ und Massedruck $p_{masse}$ während der Nachdruckphase im Gutteil-Referenzspritzgießzyklus und im aktuellen Spritzgießzyklus ermittelt wird, insbesondere nach zumindest eine der Formeln

   a)

   $$k_2 = \frac{\int_{t2}^{t3} p_{wkz,Hld}(t)}{\int_{t2}^{t3} p_{masse,Hld}(t)} \quad ,$$

   b)

   $$k_2 = \frac{p_{wkz,Hld,avg}}{p_{masse,Hld,avg}}$$

   c)

   $$k_2 = \frac{p_{wkz,Hld}}{p_{masse,Hld}}$$

   wobei:

   - $p_{masse,Hld}(t)$ der Massedruckverlauf während der Nachdruckphase ist,
   - $p_{wkz,Hld}(t)$ der Werkzeuginnendruckverlauf während der Nachdruckphase ist,
   - $t_2$ ein Zeitpunkt am oder nach dem Umschaltpunkt, insbesondere der Umschaltzeitpunkt $t_{inj,umschalt}$ ist und
   - $t_3$ der Zeitpunkt des Endes der Nachdruckphase $t_{Hld,End}$ oder ein Zeitpunkt vor dem Ende der Nachdruck-phase aber nach $t_2$ ist.

8. Verfahren nach einem der vorangegangenen Ansprüche,
   **dadurch gekennzeichnet, dass**
   mittels mindestens einem Werkzeuginnendrucksensor der zeitliche Werkzeuginnendruckverlauf $p_{wkz,ref}(t)$ des Gutteil-Referenzspritzgießzyklus und oder des aktuellen Spritzgießzyklus $p_{wkz,act}(t)$ innerhalb der Einspritz- und/oder der Nachdruckphase aufgezeichnet wird.

9. Verfahren nach einem der vorangegangenen Ansprüche,
   **dadurch gekennzeichnet, dass**

der Soll-Werkzeuginnendruckverlauf $p_{wkz,soll}(t)$ des aktuellen Spritzgießzyklus nach der Formel

$$p_{wkz,soll}(t) = p_{wkz,ref}(t) \cdot \frac{k_{mat}}{k_1 \cdot k_2}$$

ermittelt wird, wobei

$k_{mat}$ ein oder mehrere empirisch ermittelte, materialspezifische Faktoren sind und
$k_1, k_2$ Faktoren sind, die wenigstens das Fließverhalten der Schmelze undloder eine werkzeugspezifische Abhängigkeit zwischen Massedruck $p_{masse}$ und resultierendem Werkzeuginnendruck $p_{wkz}$ berücksichtigen.

**10.** Verfahren nach einem der vorangegangenen Ansprüche
**dadurch gekennzeichnet, dass**
die Abhängigkeit $k_2$ aus einer im Gutteil-Referenzspritzgießzyklus aufgenommenen Druckübertragungsfunktion $f(p_{masse,Hld,ref,i})$ berechnet wird, wobei

$$f(p_{masse,Hld,ref,i}) = \int_{t_2}^{t_3} p_{wkz,ref,i}(t) \, .$$

**11.** Verfahren nach einem der vorangegangenen Ansprüche
**dadurch gekennzeichnet, dass**
bei einem Spritzgießwerkzeug, welches mehrere Werkzeuginnendrucksensoren aufweist, das Verfahren parallel für einen oder mehrere dieser Werkzeuginnendrucksensoren durchgeführt wird.

**12.** Verfahren nach einem der vorangegangenen Ansprüche
**dadurch gekennzeichnet, dass**
während der Nachdruckphase des aktuellen Spritzgießzyklus, der sich aus der berechneten Nachdruckänderung ergebende Ist-Werkzeuginnendruck $p_{wkz,act}$ gemessen wird und mit dem Soll-Werkzeuginnendruck $p_{wkz,soll}$ verglichen wird.

**13.** Verfahren nach einem der vorangegangenen Ansprüche
**dadurch gekennzeichnet, dass**
das Verfahren für Nachdruckphasen mit mehreren Profilstufen angewandt wird.

**14.** Verfahren nach einem der vorangegangenen Ansprüche
**dadurch gekennzeichnet, dass**
zur Ermittlung eines aktuellen Umschaltpunktes im aktuellen Spritzgießzyklus der Umschaltwerkzeuginnendruck $p_{wkz,umschalt,ref}$ des Gutteil-Referenzspritzgießzyklus am Umschaltpunkt des Gutteil-Referenzspritzgießzyklus ermittelt/ausgelesen wird, anschließend ein zum Umschaltwerkzeuginnendruck $p_{wkz,umschalt,ref}$ des Gutteil-Referenzspritzgießzyklus korrespondierender Soll-Umschaltwerkzeuginnendruck $p_{wkz,umschalt,soll}$ auf der Soll-Werkzeuginnendruckkurve $p_{wkz,soll}(t)$ des aktuellen Spritzgießzyklus ermittelt wird und sobald im aktuellen Spritzgießzyklus $p_{wkz,act} \geq p_{wkz,umschalt,soll}$ gilt, von der Einspritzphase in die Nachdruckphase umgeschalten wird.

**15.** Verfahren nach einem der vorangegangenen Ansprüche
**dadurch gekennzeichnet, dass**
zur Erreichung des Soll-Werkzeuginnendruckverlaufes $p_{wkz,soll}(t)$ im aktuellen Spritzgießzyklus der hierfür erforderliche Soll-Nachdruckverlauf $p_{masse,Hld,soll}(t)$ im aktuellen Spritzgießzyklus nach einer der nachfolgenden Formeln

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) = p_{wkz,soll}(t) \cdot k_2^{-1}$$

oder

$$p_{masse,Hld,soll}(t) = \frac{p_{wkz,soll}(t)}{p_{wkz,ref}} \cdot p_{masse,Hld,ref} = p_{wkz,soll}(t) \cdot k_2^{-1}$$

oder

$$p_{masse,Hld,soll}(t) = \frac{p_{wkz,soll}(t)}{p_{wkz,ref,avg}} \cdot p_{masse,Hld,ref,avg} = p_{wkz,soll}(t) \cdot k_2^{-1}.$$

berechnet wird, wobei $p_{masse,Hld,ref}$ ein Nachdruckparameter, $p_{masse,Hld,ref}(t)$ der Nachdruckverlauf, $p_{masse,Hld,ref,avg}$ ein Mittelwert des Nachdruckes und $p_{wkz,ref,avg}$ ein Mittelwert des Werkzeuginnendruckes des Gutteil-Referenzspritzgießzyklus ist.

16. Verfahren nach einem der vorangegangenen Ansprüche
**dadurch gekennzeichnet, dass**
während der Nachdruckphase des aktuellen Spritzgießzyklus die Ist-Werkzeuginnendruckkurve $p_{wkz,act}(t)$ des aktuellen Spritzgießzyklus mit der Soll-Werkzeuginnendruckkurve $p_{wkz,soll}(t)$ verglichen wird und der Nachdruckverlauf $p_{masse,Hld,act}(t)$während des aktuellen Spritzgießzyklus oder in einem nachfolgenden Spritzgießzyklus iterativ so angepasst wird, dass eine Abweichung über mehrere Zyklen ausgeglichen wird.

17. Verfahren nach einem der vorangegangenen Ansprüche
**dadurch gekennzeichnet, dass**
der Soll-Nachdruckverlauf $p_{masse\,Hld,soll}(t)$ des aktuellen Spritzgießzyklus berechnet wird nach der Formel

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) + \left( p_{wkz,soll}(t) - p_{wkz,act}(t) \right) \cdot k_3$$

wobei $k_3$ ein Regelfaktor ist.

18. Spritzgießmaschine, welche eingerichtet und ausgebildet ist, das Verfahren nach einem oder mehreren der Ansprüche 1 bis 17 durchzuführen.

**Claims**

1. Method for operating an injection-moulding machine comprising the steps:

   a) in a current injection-moulding cycle, after an accepted-part reference injection-moulding cycle learned in a learning phase: detecting a compound pressure change $k_1$ with respect to an accepted-part reference compound pressure $p_{masse,ref}$ during at least a part of an injection phase of the current injection-moulding cycle by measuring a current compound pressure $p_{masse,act}$ and comparing the current compound pressure $p_{masse,act}$ with the accepted-part reference compound pressure $p_{masse,ref}$,
   b) determining a target mould internal pressure curve $p_{wkz,soll}(t)$ for a holding-pressure phase of the current injection-moulding cycle, wherein for this purpose a mould internal pressure curve $p_{wkz,ref}(t)$ of the accepted-part reference injection-moulding cycle is adjusted at least depending on the compound pressure change $k_1$ detected in step a) and
   c) travelling the holding-pressure curve $p_{masse,Hld,act}(t)$ of the current injection-moulding cycle in such a manner that an actual mould internal pressure curve $p_{wkz,act}(t)$ of the current injection-moulding cycle runs at least more closely along the target mould internal pressure curve $p_{wkz,soll}(t)$ than a mould internal pressure curve $p_{wkz,ref}(t)$ that is unchanged with respect to the accepted-part reference cycle.

2. Method according to Claim 1, **characterized in that** before, during or after step b), the method comprises the following steps:

b1) determining a target switch-over mould internal pressure $p_{wkz,umschalt,soll}$ for the current injection-moulding cycle at least depending on the compound pressure change $k_1$ detected in step a)

b2) switching over upon reaching the target switch-over mould internal pressure $p_{wkz,umschalt,soll}$ determined in step b).

3. Method according to one of the preceding claims, **characterized in that** the determination of the target mould internal pressure curve $p_{wkz,soll}(t)$ is additionally determined depending on a pressure transmission characteristic between a mould internal pressure $p_{wkz}$ and a corresponding compound pressure $p_{masse}$ and/or using a material-specific factor $k_{mat}$.

4. Method according to one of the preceding claims, **characterized in that** in the accepted-part reference injection-moulding cycle and in the current injection-moulding cycle a compound pressure integral during injection is determined as measured variable which correlates with a processing viscosity of the melt, in particular according to the formula:

$$W_{z,act/ref} = \int_{t_0}^{t_1} p_{masse,act/ref}(t) \, dt,$$

wherein

$t_0$ is a time of beginning the injection phase $t_{inj,start}$ or a time after closure of a back flow valve and
$t_1$ is a time of the switch-over $t_{inj,umschalt}$ or a time which lies after $t_0$ but before $t_{inj,umschalt}$.

5. Method according to one of the preceding claims, **characterized in that** in the accepted-part reference injection-moulding cycle and/or in the current injection-moulding cycle additionally at least one of the following quantities is determined and recorded if necessary:

- maximum mould internal pressure $p_{wkz,max}$ as well as
- the appurtenant time $t_{wkz,max}$,
- a drop of the mould internal pressure after reaching the maximum ($m_1$)
- a mould internal pressure average $p_{wkz,avg}$ and/or a compound pressure average $p_{masse,avg}$ in the injection phase and/or a mould internal pressure average $p_{wkz,Hld,avg}$ and/or a compound pressure average $p_{masse,Hld,avg}$ in the holding-pressure phase,
- a mould internal pressure area $p_{a,wkz}$ in the holding-pressure phase, in particular as pressure integral according to the following formula

$$\int_{t_2}^{t_3} p_{wkz,Hld}(t)$$

- a compound pressure area $p_{a,masse}$ in the holding-pressure phase, in particular as pressure integral according to the following formula

$$\int_{t_2}^{t_3} p_{masse,Hld}(t)$$

wherein:

$p_{wkz,Hld}(t)$ is the mould internal pressure curve in the holding-pressure phase,
$p_{masse,Hld}(t)$ is the compound pressure curve in the holding-pressure phase,
$p_{wkz,avg}$ is an average of the mould internal pressure during the injection phase,
$p_{masse,avg}$ is an average of the compound pressure during the injection phase,
$p_{wkz,Hld,avg}$ is an average of the mould internal pressure during the holding-pressure phase,
$p_{masse,Hld,avg}$ is an average of the compound pressure in the holding-pressure phase,

$t_2$ is a time at or after the switch-over point, in particular is the switch-over point and

$t_3$ is a time after $t_2$, e.g. the time of the end of the holding-pressure phase $t_{Hld,End}$ or a time before the end of the holding-pressure phase, in particular the time $t_{wkz,max}$ of the maximum mould internal pressure of the respective cycle.

6. Method according to one of the preceding claims, **characterized in that** a ratio of the pressure integral during injection in the current injection-moulding cycle and the pressure integral during injection of the accepted-part reference injection-moulding cycle is determined as the compound pressure change $k_1$, in particular according to the formula

$$k_1 = W_{z,act}/W_{z,ref}$$

or a ratio of the average of the compound pressure during injection in the current injection-moulding cycle and the average of the compound pressure during injection of the accepted-part reference injection-moulding cycle is determined as the compound pressure change k1, in particular according to the formula

$$k_1 = p_{masse,Hld,avg}/p_{masse,ref,avg}$$

or a ratio of one or more pressure individual values during injection in the current injection-moulding cycle and during injection of the accepted-part reference injection-moulding cycle is determined as the compound pressure change k1, in particular according to the formula

$$k_1 = p_{masse,act}/p_{masse,ref}.$$

7. Method according to one of the preceding claims, **characterized in that** a dependence ($k_2$) between mould internal pressure $p_{wkz}$ and compound pressure $p_{masse}$ during the holding-pressure phase in the accepted-part reference injection-moulding cycle and in the current injection-moulding cycle is determined as a pressure transmission characteristic, in particular according to at least one of the formulae

$$a) \qquad k_2 = \frac{\int_{t2}^{t3} p_{wkz,Hld}(t)}{\int_{t2}^{t3} p_{masse,Hld}(t)} \quad,$$

$$b) \qquad k_2 = \frac{p_{wkz,Hld,avg}}{p_{masse,Hld,avg}}$$

$$c) \qquad k_2 = \frac{p_{wkz,Hld}}{p_{masse,Hld}}$$

wherein:

- $p_{masse,Hld}(t)$ is the compound pressure curve during the holding-pressure phase
- $p_{wkz,Hld}(t)$ is the mould internal pressure curve during the holding-pressure phase,
- $t_2$ is a time at or after the switch-over point, in particular is the switch-over time $t_{inj/umschalt}$ and
- $t_3$ is the time of the end of the holding-pressure phase $t_{Hld,End}$ or a time before the end of the holding-pressure phase but after $t_2$.

8. Method according to one of the preceding claims, **characterized in that** the temporal mould internal pressure curve $p_{wkz,ref}(t)$ of the accepted-part reference injection-moulding cycle and/or of the current injection-moulding cycle $p_{wkz,act}(t)$ within the injection and/or the holding-pressure phase is recorded by means of at least one mould internal pressure sensor.

9. Method according to one of the preceding claims, **characterized in that** the target mould internal pressure curve

$p_{wkz,soll}(t)$ of the current injection-moulding cycle is determined according to the formula

$$p_{wkz,soll}(t) = p_{wkz,ref}(t) \cdot \frac{k_{mat}}{k_1 \cdot k_2}$$

wherein

$k_{mat}$ are one or more empirically determined material-specific factors and
$k_1$, $k_2$ are factors which take into account at least the flow behaviour of the melt and/or a mould-specific dependence between compound pressure $p_{masse}$ and resulting mould internal pressure $p_{wkz}$.

10. Method according to one of the preceding claims, **characterized in that** the dependence $k_2$ is calculated from a pressure transmission function $f(p_{masse,Hld,ref,i})$ recorded in the accepted-part reference injection-moulding cycle, wherein

$$f(p_{masse,Hld,ref,i}) = \int_{t_2}^{t_3} p_{wkz,ref,i}(t) \,.$$

11. Method according to one of the preceding claims, **characterized in that** in an injection mould which has a plurality of mould internal pressure sensors, the method is carried out in parallel for one or more of these mould internal pressure sensors.

12. Method according to one of the preceding claims, **characterized in that** during the holding-pressure phase of the current injection-moulding cycle, the actual mould internal pressure $w_{wkz,act}$ obtained from the calculated holding-pressure change is measured and compared with the target mould internal pressure $p_{wkz,soll}$.

13. Method according to one of the preceding claims, **characterized in that** the method is applied for holding-pressure phases with several profile stages.

14. Method according to one of the preceding claims, **characterized in that** in order to determine a current switch-over point in the current injection-moulding cycle, the switch-over mould internal pressure $p_{wkz,umschalt,ref}$ of the accepted-part reference injection-moulding cycle is determined/read out at the switch-over point of the accepted part reference injection-moulding cycle, then a target switch-over mould internal pressure $p_{wkz,umschalt,soll}$ corresponding to the switch-over mould internal pressure $p_{wkz,umschalt,ref}$ of the accepted-part reference injection-moulding cycle is determined on the target mould internal pressure curve $p_{wkz,soll}(t)$ of the current injection-moulding cycle and as soon as $p_{wkz,act} \geq p_{wkz,umschalt,soll}$ in the current injection-moulding cycle, a switch-over takes place from the injection phase into the holding-pressure phase.

15. Method according to one of the preceding claims, **characterized in that** in order to reach the target mould internal pressure curve $p_{wkz,soll}(t)$ in the current injection-moulding cycle, the target holding-pressure curve $p_{masse,Hld,soll}(t)$ required for this in the current injection-moulding cycle is calculated according to one of the following formulae

a)

$$p_{masse,Hld,soll}(t) = \frac{p_{wkz,soll}(t)}{\int_{t2}^{t3} p_{wkz,ref}(t)} \cdot \int_{t2}^{t3} p_{masse,Hld,ref}(t) = p_{wkz,soll}(t) \cdot k_2^{-1}$$

or
b)

$$p_{masse,Hld,soll}(t) = \frac{p_{wkz,soll}(t)}{p_{wkz,ref,avg}} \cdot p_{masse,Hld,ref,avg} = p_{wkz,soll}(t) \cdot k_2^{-1}$$

or

c)

$$p_{masse,Hld,soll}(t) = \frac{p_{wkz,soll}(t)}{p_{wkz,ref}} \cdot p_{masse,Hld,ref} = p_{wkz,soll}(t) \cdot k_2^{-1}$$

wherein $p_{masse,Hld,ref}$ is a holding-pressure parameter, $p_{masse,Hld,ref}(t)$ is the holding-pressure curve, $p_{masse,Hld,ref,avg}$ is an average of the holding pressure and $p_{wkz,ref,avg}$ is an average of the mould internal pressure of the accepted-part reference injection-moulding cycle.

16. Method according to one of the preceding claims, **characterized in that** during the holding-pressure phase of the current injection-moulding cycle, the actual mould internal pressure curve $p_{wkz,act}(t)$ of the current injection-moulding cycle is compared with the target mould internal pressure curve $p_{wkz,soll}(t)$ and the holding-pressure curve $p_{masse,Hld,act}(t)$ is adjusted iteratively during the current injection-moulding cycle or in a subsequent injection-moulding cycle such that any deviation is compensated over several cycles.

17. Method according to one of the preceding claims, **characterized in that** the target holding-pressure curve $p_{masse,Hld,soll}(t)$ of the current injection-moulding cycle is calculated according to the formula

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) + \left( p_{wkz,soll}(t) - p_{wkz,act}(t) \right) \cdot k_3$$

wherein $k_3$ is a control factor.

18. Injection-moulding machine which is adapted and configured to carry out the method according to one or more of Claims 1 to 17.

## Revendications

1. Procédé servant à faire fonctionner une machine de moulage par injection, comprenant les étapes suivantes :

   a) après un cycle de moulage par injection de référence de pièce acceptée appris dans une phase d'apprentissage, dans un cycle de moulage par injection actuel : détection d'une modification de pression massique $k_1$ par rapport à une pression massique de référence de pièce acceptée $p_{masse,ref}$ pendant au moins une partie d'une phase d'injection du cycle de moulage par injection actuel par la mesure d'une pression massique actuelle $p_{masse,act}$ et comparaison de la pression massique actuelle $p_{masse,act}$ à la pression massique de référence de pièce acceptée $p_{masse,ref}$,
   b) détermination d'un tracé de pression interne d'outil nominale $p_{wkz,soll}(t)$ pour une phase de maintien en pression du cycle de moulage par injection actuel, dans lequel pour cela, un tracé de pression interne d'outil $p_{wkz,ref}(t)$ du cycle de moulage par injection de référence de pièce acceptée est adapté au moins en fonction de la modification de pression massique $k_1$ détectée à l'étape a), et
   c) le tracé de maintien en pression $p_{masse,Hld,act}(t)$ du cycle de moulage par injection actuel commence ainsi qu'un tracé de pression interne d'outil réelle $p_{wkz,act}(t)$ du cycle de moulage par injection actuel passe au moins plus près le long du tracé de pression interne d'outil nominale $p_{wxz,soll}(t)$ qu'un tracé de pression interne d'outil $p_{wkz,ref}(t)$ inchangé par rapport au cycle de référence de pièce acceptée.

2. Procédé selon la revendication 1,
   **caractérisé en ce que**
   le procédé, avant, après ou pendant l'étape b), présente en outre les étapes suivantes :

   b1) détermination d'une pression interne d'outil de commutation nominale $p_{wkz,umschalt,soll}$ pour le cycle de moulage par injection actuel au moins en fonction de la modification de pression massique $k_1$ détectée à l'étape a),
   b2) commutation une fois la pression interne d'outil de commutation nominale $P_{wkz,umschalt,soll}$ déterminée à l'étape b1) atteinte.

3. Procédé selon l'une des revendications précédentes,
**caractérisé en ce que**
la détermination du tracé de pression interne d'outil nominale $p_{wxz,soll}(t)$ est déterminée en plus en fonction d'une caractéristique de transfert de pression entre une pression interne d'outil $p_{wkz}$ et une pression massique correspondante $p_{masse}$ et/ou en utilisant un facteur $k_{mat}$ spécifique au matériau.

4. Procédé selon l'une des revendications précédentes,
**caractérisé en ce que**
dans le cycle de moulage par injection de référence de pièce acceptée et dans le cycle de moulage par injection actuel, une intégrale de pression massique pendant l'injection est déterminée en tant que grandeur de mesure qui corrèle avec une viscosité de traitement de la masse fondue, en particulier selon la formule

$$W_{z,act/ref} = \int_{t_0}^{t_1} p_{masse,act/ref}(t)\, dt,$$

où $t_0$ est un temps du début de la phase d'injection

$t_{inj,start}$ ou un temps après la fermeture d'un verrouillage de courant inverse et
$t_1$ un temps de la commutation $t_{inj,umschalt}$ ou un temps qui est après $t_0$ mais avant $t_{inj,umschalt}$.

5. Procédé selon l'une des revendications précédentes,
**caractérisé en ce que**
dans le cycle de moulage par injection de référence de pièce acceptée et/ou dans le cycle de moulage par injection actuel, au moins une des grandeurs suivantes est déterminée en plus et enregistrée ci-besoin :

- pression interne d'outil maximale $p_{wkz,max}$ ainsi que
- le temps $t_{wkz,max}$ correspondant,
- une baisse de la pression interne d'outil après atteinte du maximum ($m_1$),
- une moyenne de pression interne d'out $p_{wkz,avg}$ et/ou une moyenne de pression massique $p_{masse,avg}$ pendant la phase d'injection et/ou une moyenne de pression interne d'outil $p_{wkz,Hld,avg}$ et/ou une moyenne de pression massique $p_{masse,Hld,avg}$ pendant la phase de maintien en pression,
- une aire de pression interne d'outil $p_{a,wkz}$ pendant la phase de maintien en pression, en particulier comme intégrale de pression selon la formule suivante

$$\int_{t_2}^{t_3} p_{wkz,Hld}(t)$$

- une aire de pression massique $p_{a,masse}$ pendant la phase de maintien en pression, en particulier en tant qu'intégrale de pression selon la formule suivante

$$\int_{t_2}^{t_3} p_{masse,Hld}(t)$$

où :

$p_{wkz,Hld}(t)$ est le tracé de pression interne d'outil dans la phase de maintien en pression,
$p_{masse,Hld}(t)$ est le tracé de pression massique dans la phase de maintien en pression,
$p_{wkz,avg}$ est une valeur médiane de la pression interne d'outil pendant la phase d'injection,
$p_{masse,avg}$ est une valeur médiane de la pression massique pendant la phase d'injection,
$p_{wkz,Hld,avg}$ est une valeur médiane de la pression interne d'outil pendant la phase de maintien en pression,
$p_{masse,Hld,avg}$ est une valeur médiane de la pression massique dans la phase de maintien en pression,

$t_2$ est un temps au ou après le point de commutation, en particulier le temps de commutation et $t_3$ est un temps après $t_2$, par exemple le temps de la fin de la phase de maintien en pression $t_{Hld,End}$ ou un temps avant la fin de la phase de maintien en pression, en particulier le temps $t_{wkz,max}$ de la pression interne d'outil maximale du cycle respectif.

6. Procédé selon l'une des revendications précédentes,
   **caractérisé en ce que**
   un rapport de l'intégrale de pression pendant l'injection dans le cycle de moulage par injection actuel et de l'intégrale de pression pendant l'injection du cycle de moulage par injection de référence de pièce acceptée est déterminé en tant que modification de pression massique $k_1$, en particulier selon la formule

$$k_1 = W_{z,act}/W_{z,ref}$$

ou
un rapport de la valeur médiane de la pression massique pendant l'injection dans le cycle de moulage par injection actuel et de la valeur médiane de la pression massique pendant l'injection du cycle de moulage par injection de référence de pièce acceptée est déterminé en tant que modification de la pression massique $k_1$, en particulier selon la formule

$$k_1 = p_{masse,Hld,avg}/p_{masse,ref,avg}$$

ou
un rapport d'une ou plusieurs valeur(s) individuelle(s) de pression pendant l'injection dans le cycle de moulage par injection actuel et pendant l'injection du cycle de moulage par injection de référence de pièce acceptée est déterminé en tant que modification de la pression massique $k_1$, en particulier selon la formule

$$k_1 = p_{masse,act}/p_{masse,ref}.$$

7. Procédé selon l'une des revendications précédentes,
   **caractérisé en ce que**
   une dépendance ($k_2$) entre la pression interne d'outil $p_{wkz}$ et la pression massique $p_{masse}$ pendant la phase de maintien en pression dans le cycle de moulage par injection de référence de pièce acceptée et dans le cycle de moulage par injection actuel est déterminée en tant que caractéristique de transfert de pression, en particulier selon au moins une des formules

   a)

$$k_2 = \frac{\int_{t2}^{t3} p_{wkz,Hld}(t)}{\int_{t2}^{t3} p_{masse,Hld}(t)}$$

   b)

$$k_2 = \frac{p_{wkz,Hld,avg}}{p_{masse,Hld,avg}}$$

   c)

$$k_2 = \frac{p_{wkz,Hld}}{p_{masse,Hld}}$$

où : - $p_{masse,Hld}(t)$ est le tracé de pression massique pendant la phase de maintien en pression,

- $p_{wkz,Hld}(t)$ est le tracé de pression interne d'outil pendant la phase de maintien en pression,
- $t_2$ est un temps au ou après le temps de commutation, en particulier le temps de commutation $t_{inj,umschalt}$ et
- $t_3$ est le temps de la fin de la phase de maintien en pression $t_{Hld,End}$ ou un temps avant la fin de la phase de maintien en pression mais après $t_2$.

8. Procédé selon l'une des revendications précédentes,
   **caractérisé en ce que**
   le tracé de pression interne d'outil temporel $p_{wkz,ref}(t)$ du cycle de moulage par injection de référence de pièce acceptée et/ou du cycle d'injection actuel $p_{wkz,act}(t)$ à l'intérieur de la phase d'injection et/ou de maintien en pression est enregistré au moyen d'au moins un capteur de pression interne d'outil.

9. Procédé selon l'une des revendications précédentes,
   **caractérisé en ce que**
   le tracé de pression interne d'outil nominale $p_{wkz,soll}(t)$ du cycle d'injection actuel est déterminé selon la formule

$$p_{wkz,soll}(t) = p_{wkz,ref}(t) \cdot \frac{k_{mat}}{k_1 \cdot k_2}$$

où

$k_{mat}$ est un ou plusieurs facteur (s) spécifique (s) au matériau déterminé(s) de manière empirique et
$k_1$, $k_2$ sont des facteurs qui tiennent compte au moins du comportement d'écoulement de la masse fondue et/ou d'une dépendance spécifique à l'outil entre la pression massique $p_{masse}$ et la pression interne d'outil $p_{wkz}$ résultante.

10. Procédé selon l'une des revendications précédentes,
    **caractérisé en ce que**
    la dépendance $k_2$ est calculée à partir d'une fonction de transfert de pression $f(p_{masse,Hld,ref,i})$ enregistrée dans le cycle de moulage par injection de référence de pièce acceptée, où

$$f(p_{masse,Hld,ref,i}) = \int_{t_2}^{t_3} p_{wkz,ref,i}(t) \cdot$$

11. Procédé selon l'une des revendications précédentes,
    **caractérisé en ce que**
    dans un outil de moulage par injection qui présente plusieurs capteurs de pression interne d'outil, le procédé est exécuté en parallèle pour un ou plusieurs de ces capteurs de pression interne d'outil.

12. Procédé selon l'une des revendications précédentes,
    **caractérisé en ce que**
    pendant la phase de maintien en pression du cycle d'injection actuel, la pression interne d'outil réelle $p_{wkz,act}$ fournie par la modification de maintien en pression calculée est mesurée et comparée à la pression interne d'outil nominale $p_{wkz,soll}$.

13. Procédé selon l'une des revendications précédentes,
    **caractérisé en ce que**
    le procédé est appliqué pour des phases de maintien en pression à plusieurs degrés de profilage.

14. Procédé selon l'une des revendications précédentes,
    **caractérisé en ce que**
    pour déterminer un point de commutation actuel dans le cycle d'injection actuel, la pression interne d'outil de commutation $p_{wkz,umschalt,réf}$ du cycle de moulage par injection de référence de pièce acceptée est déterminée/lue au point de commutation du cycle de moulage par injection de référence de pièce acceptée, ensuite, une pression interne d'outil de commutation nominale $p_{wkz,umschalt,soll}$ correspondant à la pression interne d'outil de commutation $p_{wkz,umschalt,ref}$ du cycle de moulage par injection de référence de pièce acceptée est déterminée sur la courbe de pression interne d'outil nominale $p_{wkz,soll}(t)$ du cycle de moulage par injection actuel et dès que l'on a $p_{wkz,act} \geq p_{wkz,umschalt,soll}$ dans le cycle de moulage par injection actuel, on commute de la phase d'injection à la phase de maintien en pression.

15. Procédé selon l'une des revendications précédentes,
**caractérisé en ce que**
pour atteindre le tracé de pression interne d'outil nominale $p_{wkz,soll}(t)$ dans le cycle d'injection actuel, le tracé de maintien en pression nominale $p_{masse,Hld,soll}(t)$ nécessaire à cela dans le cycle de moulage par injection actuel est calculé selon l'une des formules suivantes

$$p_{masse,Hld,soll}(t) = \frac{p_{wkz,soll}(t)}{\int_{t2}^{t3} p_{wkz,ref}(t)} \cdot \int_{t2}^{t3} p_{masse,Hld,ref}(t) = p_{wkz,soll}(t) \cdot k_2^{-1}$$

ou

$$p_{masse,Hld,soll}(t) = \frac{p_{wkz,soll}(t)}{p_{wkz,ref}} \cdot p_{masse,Hld,ref} = p_{wkz,soll}(t) \cdot k_2^{-1}$$

ou

$$p_{masse,Hld,soll}(t) = \frac{p_{wkz,soll}(t)}{p_{wkz,ref,avg}} \cdot p_{masse,Hld,ref,avg} = p_{wkz,soll}(t) \cdot k_2^{-1}$$

où $p_{masse,Hld,ref}$ est un paramètre de maintien en pression, $p_{masse,Hld,ref}(t)$ est le tracé de maintien en pression, $p_{masse,Hld,ref,avg}$ est une valeur médiane du maintien en pression et $p_{wkz,ref,avg}$ est une valeur médiane de la pression interne d'outil du cycle de moulage par injection de référence de pièce acceptée.

16. Procédé selon l'une des revendications précédentes,
**caractérisé en ce que**
pendant la phase de maintien en pression du cycle de moulage par injection actuel, la courbe de pression interne d'outil réelle $p_{wkz,act}(t)$ du cycle de moulage par injection actuel est comparée à la courbe de pression interne d'outil nominale $p_{wkz,soll}(t)$, et le tracé de maintien en pression $p_{masse,Hld,act}(t)$ pendant le cycle de moulage par injection actuel ou dans un cycle de moulage par injection suivant est adapté de manière itérative de façon à ce qu'un écart soit compensé sur plusieurs cycles.

17. Procédé selon l'une des revendications précédentes,
**caractérisé en ce que**
le tracé de maintien en pression nominal $p_{masse,Hld,soll}(t)$ du cycle de moulage par injection actuel est calculé selon la formule

$$p_{masse,Hld,soll}(t) = \frac{p_{wkz,soll}(t)}{\int_{t_2}^{t_3} p_{wkz,ref}(t)} \cdot \int_{t_2}^{t_3} p_{masse,Hld,ref}(t) + \left( p_{wkz,soll}(t) - p_{wkz,act}(t) \right) \cdot k_3$$

où $k_3$ est un facteur de réglage.

18. Machine de moulage par injection qui est conçue et formée pour exécuter le procédé selon l'une ou plusieurs des revendications 1 à 17.

Fig. 1

EP 3 870 422 B1

Fig. 2

Fig. 3

Fig. 4

Fig. 5

$t_{umschalt,act}$

Verschobener Umschaltpunkt, geänderte Nachdruckhöhe

- - - - Massedruck PP MFI 6 mit Nachdruckanpassung

······· Massedruck PP MFI 11

$p_{masse,Hld,act}(t)$

$p_{wkz,act}(t) \approx p_{wkz,soll}(t)$

······· Werkzeuginnendruck PP MFI 11

- - - - Werkzeuginnendruck PP MFI 6 mit Regelung

$p_{wkz,umschalt,soll}$

$p_{wkz,umschalt,ref}$

$t_{umschalt,ref}$

$t_{umschalt,soll}$

800 700 600 500 400 300 200 100 0 -100

2 3 4 5 6 7 8 9 10

Fig. 6

EP 3 870 422 B1

START

Massedruckverlauf
gespeichert
(Referenzzyklus)

aktueller
Massedruckverlauf in
der Einspritzphase

aktuell ≠
gespeichert?                    nein

ja

1) Soll-Werkzeuginnendruckverlauf
   ($p_{wkz,soll}$) (Berechnung)
---
2)   Umschaltwerkzeuginnendruck
     (Berechnung)

Anpassung des
Umschaltpunktes an 2)

Anpassung des
Nachdrucks an 1)

Überwachung
Ist-Werkzeuginnendruckverlauf
($p_{wkz,act}$)

($p_{wkz,act}$) ≠ ($p_{wkz,soll}$)              nein

ja

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015117237 B3
- DE 102013111257 B3
- DE 2358911 A
- DE 3524310 C1
- DE 102005032367 A1
- EP 2583811 A1
- DE 102007061775 A1